# EUROPÄISCHE PATENTSCHRIFT

(11) **EP 3 338 132 B1**
(45) Veröffentlichungstag und Bekanntmachung des Hinweises auf die Patenterteilung: **28.07.2021**
(21) Anmeldenummer: 16760668.0
(22) Anmeldetag: 18.08.2016
(51) Int. Cl.: G02B 13/00, G02B 27/10, H04N 5/225, H04N 5/232, G02B 26/08

(54) **MULTIAPERTURABBILDUNGSVORRICHTUNG, TRAGBARE VORRICHTUNG UND VERFAHREN ZUM HERSTELLEN EINER MULTIAPERTURABBILDUNGSVORRICHTUNG**
MULTI-APERTURE IMAGING DEVICE, PORTABLE DEVICE, AND METHOD FOR PRODUCING A MULTI-APERTURE IMAGING DEVICE
DISPOSITIF D'IMAGERIE À OUVERTURE MULTIPLE, DISPOSITIF PORTATIF ET PROCÉDÉ DE FABRICATION D'UN DISPOSITIF D'IMAGERIE À OUVERTURE MULTIPLE

(30) Priorität: 19.08.2015 DE 102015215844
(43) Veröffentlichungstag der Anmeldung: 27.06.2018
(73) Patentinhaber: Fraunhofer-Gesellschaft zur Förderung der angewandten Forschung e.V., 80686 München (DE)
(72) Erfinder: WIPPERMANN, Frank, 98617 Meiningen (DE); BRÜCKNER, Andreas, 07743 Jena (DE); BRÄUER, Andreas, 07646 Schlöben (DE); OBERDÖRSTER, Alexander, 07749 Jena (DE)
(74) Vertreter: König, Andreas Rudolf
(86) Internationale Anmeldenummer: PCT/EP2016/069650
(87) Internationale Veröffentlichungsnummer: WO 2017/029378

(56) Entgegenhaltungen:
- DE-A1-102013 209 819
- DE-B3-102014 213 371
- JP-A- H 104 540
- US-A1- 2014 111 650
- US-A1- 2015 109 468
- US-B1- 6 992 699
- US-B1- 9 083 873

## Beschreibung

Die vorliegende Erfindung bezieht sich auf eine Multiaperturabbildungsvorrichtung und auf ein Verfahren zum Herstellen derselben. Die vorliegende Erfindung bezieht sich ferner auf eine tragbare Vorrichtung mit einer Multiaperturabbildungsvorrichtung. Die vorliegende Erfindung bezieht sich ferner auf ein Multiaperturabbildungssystem mit linearer Kanalanordnung und translativ bewegtem Umlenkspiegel.

Konventionelle Kameras übertragen in einem Kanal das gesamte Gesichtsfeld und sind in ihrer Miniaturisierung begrenzt. In Smartphones werden zwei Kameras genutzt, die in und entgegen dem Richtungssinn der Flächennormalen des Displays orientiert sind.

Eine Anforderung an Vorrichtungen mit einer Multiaperturabbildungsvorrichtung besteht in Freiheitsgraden bezüglich eines Designs derselben, was auch zu Anforderungen an Kameras bezüglich deren Miniaturisierung, insbesondere hinsichtlich der Erzielung einer geringen Bauhöhe, führt.

In US 2014/111650 A1 ist eine Vorrichtung zum Erfassen eines Bildes mittels gefalteter Optiken beschrieben, die zumindest eine reflektive oder refraktive Oberfläche aufweisen.

In US 2015/109468 A1 ist ein Verfahren und eine Vorrichtung zum Steuern des Auslesens von Reihen von Pixelwerten von Sensoren, die verschiedenen optischen Ketten entsprechen, die zum Erfassen von Teilen desselben Bildbereichs verwendet werden, beschrieben.

In US 6,992,699 B1 ist eine Kombination aus mobilem Terminal und Kamera mit mehreren Lichtöffnungen im Gehäuse beschrieben. Eine Öffnung ist auf einer Vorderseite des Gehäuses angeordnet, während eine andere Öffnung auf einer Rückseite des Gehäuses angeordnet ist.

In JP H10 4540 A ist eine Realisierung eines PHS-Videotelefons mit beschrieben, das in der Lage ist, das Bild eines Objekts relativ zum Hauptkörper einzugeben, indem ein Linsenabschnitt eines Bildeingabeabschnitts in einem Hauptteil angeordnet wird.

In DE 10 2013 209 819 A1 ist eine Vorrichtung mit einer optischen Struktur und Stegen beschrieben, bei der zwischen den Stegen und der tragenden Struktur Kleber angeordnet ist, wobei der Kleber wirksam ist, um nach dessen Ausheilung eine vorbestimmte Ausrichtung der optischen Struktur bezüglich einer Bezugsebene zu bewirken
In US 9,083,873 B1 wird eine Vorrichtung und ein Verfahren zum Bereitstellen einer Linsenfunktionalität mit mehreren Aperturen beschrieben. In einem Beispiel wird eine Vorrichtung bereitgestellt, die mehrere optische Elementanordnungen umfasst, die zum Fokussieren von Licht konfiguriert sind.

In DE 2014 213 371 B3 ist eine Vorrichtung zur Erfassung eines Objektbereichs mit einem flachen Gehäuse beschrieben. Die Vorrichtung umfasst eine Multiaperturvorrichtung mittels derer unterschiedliche Objektbereiche erfassbar sind.

Wünschenswert wäre demnach ein Konzept für eine Multiaperturabbildungsvorrichtung, die eine Miniaturisierung derselben ermöglicht, so dass Freiheitsgrade für Vorrichtungen umfassend die Multiaperturabbildungsvorrichtung erhalten werden.

Die Aufgabe der vorliegenden Erfindung besteht deshalb darin, eine Multiaperturabbildungsvorrichtung zu schaffen, die in einem hohen Maße miniaturisierbar ist und auf eine Verringerung der Bauhöhe abzielt.

Diese Aufgabe wird durch den Gegenstand der unabhängigen Patentansprüche gelöst.

Eine Erkenntnis der vorliegenden Erfindung besteht darin, erkannt zu haben, dass eine Anordnung von optischen Kanälen in einem einzeiligen Array eine Miniaturisierung einer Multiaperturabbildungsvorrichtung entlang einer Richtung senkrecht zu einer Zeilenerstreckungsrichtung des einzeiligen Arrays bis hin zu einem Ausmaß der einen Zeile ermöglicht. Eine durch die einzeilige Ausführung des Arrays miniaturisierte Seite der Multiaperturabbildungsvorrichtung kann im Wesentlichen parallel zu einer zu miniaturisierenden Seite einer Vorrichtung ausgerichtet werden, so dass Freiheitsgrade bei der Auslegung der Vorrichtung durch die miniaturisierte Seite erhalten werden. Durch die Strahlumlenkeinrichtung kann eine Umlenkung von Strahlengängen der optischen Kanäle in beliebige Richtungen erhalten werden, so dass die Orientierung der optischen Kanäle bezüglich eines zu erfassenden Objektbereichs beliebig sein kann, was weitere Freiheitsgrade und eine Miniaturisierung der Abbildungsvorrichtung entlang zumindest einer Richtung ermöglicht.

Gemäß einem Ausführungsbeispiel umfasst eine Multiaperturabbildungsvorrichtung ein einzeiliges Array von nebeneinander angeordneten optischen Kanälen und eine Strahlumlenkeinrichtung zum Umlenken eines Strahlengangs der optischen Kanäle. Die Vorrichtung umfasst einen optischen Bildstabilisator zur Bildstabilisierung entlang einer ersten Bildachse durch Erzeugen einer Rotationsbewegung der Strahlumlenkeinrichtung, und um das einzeilige Array entlang einer Zeilenerstreckungsrichtung basierend auf einer translatorischen Bewegung translatorisch für eine Bildstabilisierung entlang einer zweiten Bildachse zu bewegen. Die Strahlumlenkeinrichtung weist eine erste Stellung und eine zweite Stellung auf, zwischen denen die Strahlumlenkeinrichtung entlang einer Zeilenerstreckungsrichtung des einzeiligen Arrays translatorisch bewegbar ist. Die Strahlumlenkeinrichtung ist so ausgebildet, dass sie in der ersten Stellung und in der zweiten Stellung den Strahlengang jedes optischen Kanals in eine voneinander verschiedene Richtung umlenkt.

Basierend auf dem einzeiligen Array kann eine Ausdehnung der Multiaperturabbildungsvorrichtung entlang einer Richtung senkrecht zu einer Zeilenerstreckungsrichtung des einzeiligen Arrays gering oder minimal sein.

Gemäß weiteren Ausführungsbeispielen weist eine tragbare Vorrichtung eine Multiaperturabbildungsvorrichtung gemäß Ausführungsbeispielen auf.

Gemäß weiteren Ausführungsbeispielen umfasst ein Verfahren zum Herstellen einer Multiaperturabbildungsvorrichtung ein Bereitstellen eines einzeiligen Arrays von nebeneinander angeordneten optischen Kanälen und ein Anordnen einer Strahlumlenkeinrichtung zum Umlenken eines Strahlengangs der optischen Kanäle. Das Verfahren umfasst ein Anordnen eines optischen Bildstabilisators zur Bildstabilisierung entlang einer ersten Bildachse durch Erzeugen einer Rotationsbewegung der Strahlumlenkeinrichtung und um das einzeilige Array entlang einer Zeilenerstreckungsrichtung basierend auf einer translatorischen Bewegung translatorisch für eine Bildstabilisierung entlang einer zweiten Bildachse zu bewegen. Die Strahlumlenkeinrichtung wird so angeordnet, dass die Strahlumlenkeinrichtung eine erste Stellung und eine zweite Stellung aufweist, zwischen denen die Strahlumlenkeinrichtung entlang einer Zeilenerstreckungsrichtung des einzeiligen Arrays translatorisch bewegbar ist und so dass die Strahlumlenkeinrichtung in der ersten Stellung und in der zweiten Stellung den Strahlengang jedes optischen Kanals in eine voneinander verschiedene Richtung umlenkt.

Weitere vorteilhafte Ausführungsformen sind der Gegenstand der abhängigen Patentansprüche.

Bevorzugte Ausführungsbeispiele der vorliegenden Erfindung werden nachfolgend Bezug nehmend auf die beiliegenden Zeichnungen erläutert. Es zeigen:
- Fig. 1: eine schematische Ansicht einer Multiaperturabbildungsvorrichtung gemäß einem Ausführungsbeispiel;
- Fig. 2: eine schematische Ansicht eines Gesamtgesichtsfeldes 20 umfassend vier Teilgesichtsfelder gemäß einem Ausführungsbeispiel;
- Fig. 3: eine schematische Ansicht einer Multiaperturabbildungsvorrichtung gemäß einem Ausführungsbeispiel, die einen optischen Bildstabilisator umfasst;
- Fig. 4: eine schematische Ansicht eines einzeiligen Arrays und einer Strahlumlenkeinrichtung gemäß einem Ausführungsbeispiel;
- Fig. 5: ein schematisches Diagramm eines Kräfteverlaufs über eine Bewegung der Strahlumlenkeinrichtung über eine translatorische Bewegung hinweg und gemäß einem Ausführungsbeispiel;
- Fig. 6: eine schematische perspektivische Ansicht einer tragbaren Vorrichtung gemäß einem Ausführungsbeispiel;
- Fig. 7: eine schematische perspektivische Ansicht einer tragbaren Vorrichtung, die zwei Multiaperturabbildungsvorrichtungen umfasst, gemäß einem Ausführungsbeispiel; und
- Fig. 8: einen schematischen Aufbau umfassend eine erste Multiaperturabbildungsvorrichtung und eine zweite Multiaperturabbildungsvorrichtung mit einem gemeinsamen Bildsensor.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

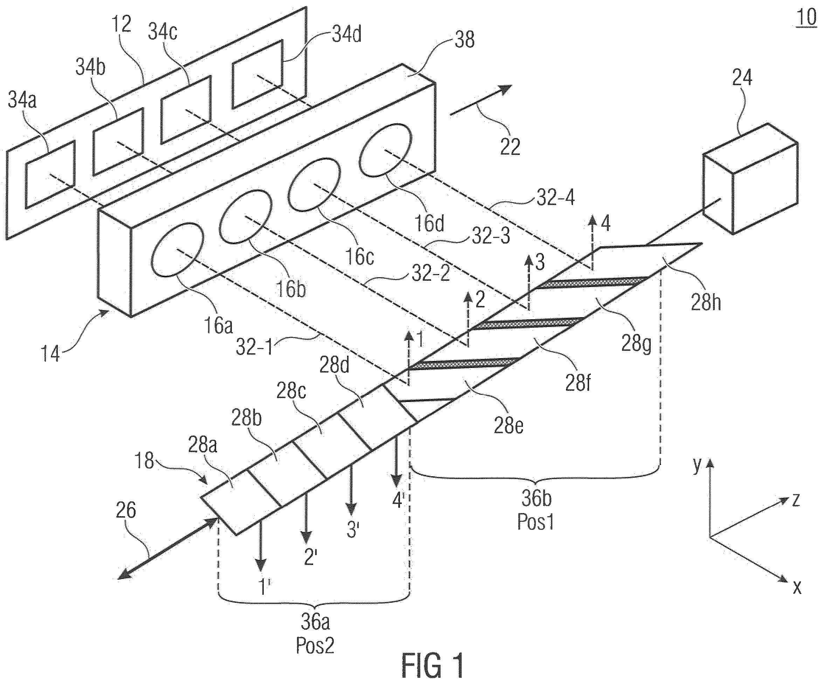

Fig. 1 zeigt eine schematische Ansicht einer Multiaperturabbildungsvorrichtung 10 gemäß einem Ausführungsbeispiel. Die Multiaperturabbildungsvorrichtung 10 umfasst einen Bildsensor 12, ein einzeiliges Array 14 von optischen Kanälen 16a-d und eine Strahlumlenkeinrichtung 18. Die Strahlumlenkeinrichtung 18 weist eine erste Stellung und eine zweite Stellung auf, zwischen denen die Strahlumlenkeinrichtung 18 entlang einer Zeilenerstreckungsrichtung 22 des einzeiligen Arrays translatorisch bewegbar ist. Die Strahlumlenkeinrichtung ist ausgebildet, um in der ersten Stellung und in der zweiten Stellung den Strahlengang jedes optischen Kanals 16a-d in eine voneinander verschiedene Richtung umzulenken. Beispielsweise kann ein Aktor 24 ausgebildet sein, um die Strahlumlenkeinrichtung 18 basierend auf einer translatorischen Bewegung 26, die parallel bzw. antiparallel zu der Zeilenerstreckungsrichtung 22 verläuft, zu bewegen. Die Strahlumlenkeinrichtung kann als einseitig oder beidseitig reflektiver Spiegel gebildet sein. Spiegelflächen können eben oder kontinuierlich oder diskontinuierlich gekrümmt ausgebildet sein. Alternativ oder zusätzlich kann die Strahlumlenkeinrichtung 18 Facetten aufweisen, die benachbart zueinander angeordnet sind, und ausgebildet sind, um einen empfangenen Strahlengang in eine von anderen Facetten verschiedene Richtung umzulenken. Die Spiegelkörper können ferner einen prismatischen Querschnitt aufweisen.

Beispielsweise kann die Strahlumlenkeinrichtung 18 eine Mehrzahl oder Vielzahl von Strahlumlenkelementen 28a-h umfassen. Die Strahlumlenkelemente 28a-h können beispielsweise individuell oder gruppenweise verschieden orientiert sein, so dass basierend auf einer Positionierung der Strahlumlenkelemente 28a-h jeweils ein Strahlumlenkelement 28a oder 28e, 28b oder 28f, 28c oder 28g bzw. 28d oder 28h entlang eines Strahlengangs 32-1, 32-2, 32-3 oder 32-4 eines jeweiligen optischen Kanals 16a-d angeordnet ist. Beispielsweise können die Strahlengänge 32-1 bis 32-4 zwischen dem Bildsensor 12 und der Strahlumlenkeinrichtung 18 im Wesentlichen parallel (kollimiert) zueinander verlaufen. Beispielsweise können die Strahlumlenkelemente 28e-h voneinander verschiedene Neigungen und/oder Reflexionscharakteristika aufweisen, so dass die Strahlgänge 32-1 bis 32-4 an den Strahlumlenkelementen 28e-h in unterschiedliche Richtungen gelenkt werden. Die unterschiedlichen Richtungen können hin zu voneinander verschiedenen Teilgesichtsfeldern eines zu erfassenden Gesamtgesichtsfeldes verlaufen, wobei unterschiedliche Teilgesichtsfelder über unterschiedliche optische Kanälen 16a-d und unterschiedlichen Bildsensorbereichen 34a-d des Bildsensors 12 erfasst werden. Wie es durch die Bezeichnungen 1, 1', 2, 2', 3, 3', 4 und 4' angedeutet ist, können die Strahlengänge 32-1 bis 32-4 der optischen Kanäle 16a-d von der Umlenkeinrichtung 18 in von einander verschiedene Blickrichtungen umgelenkt werden. Eine erste Blickrichtung kann beispielsweise zumindest teilweise in eine positive y-Richtung verlaufen. Eine zweite Blickrichtung kann bspw. zumindest teilweise in eine negative y-Richtung verlaufen. Weist die Umlenkeinrichtung 18 eine zweite Position auf, können die Strahlumlenkelemente 28a-d vor dem einzeiligen Array 14 angeordnet sein, um die Strahlengänge 32-1 bis 32-4 der optischen Kanäle 16a-d umzulenken. Die Strahlumlenkelemente 28a-d können so angeordnet sein, dass diese die Strahlengänge 32-1 bis 32-4 entlang einer negativen y-Richtung umlenken. Die erste und die zweite Blickrichtung können basierend auf einer Ausrichtung (Winkel) der Strahlumlenkelemente bzgl. des einzeiligen Arrays 14 beliebig sein. Gemäß einem Ausführungsbeispiel verlaufen die Blickrichtungen entlang unterschiedlicher Seiten und/oder Hauptseiten der Multiaperturabbildungsvorrichtung 10.

Die Strahlumlenkelemente 28a-h können beispielsweise Facetten einer als Facettenspiegel gebildeten Strahlumlenkeinrichtung 18 sein. Das bedeutet, dass die Strahlumlenkeinrichtung als Array von Facetten, die entlang der Zeilenerstreckungsrichtung 22 angeordnet sind, gebildet sein kann. Alternativ oder zusätzlich kann ein erster Abschnitt 36a der Strahlumlenkeinrichtung 18 im Wesentlichen abschnittsweise gekrümmt ausgebildet sein. Ein zweiter Abschnitt 36b kann ebenfalls abschnittsweise gekrümmt ausgebildet sein, wobei voneinander verschiedene abschnittsweise Krümmungen eine unterschiedliche Ablenkung der Strahlengänge 32-1 bis 32-4 ermöglichen kann. Das bedeutet, dass die Strahlumlenkelemente 28a-d, 28e-h bzw. 28a-h abschnittsweise stetig oder unstetig miteinander verbunden sein können. In einer ersten Position kann der Abschnitt 36b angeordnet sein, um die Strahlengänge 32-1 bis 32-4 umzulenken. In der zweiten Position kann der Abschnitt 36a ausgebildet sein, um die Strahlengänge 32-1 bis 32-4 umzulenken. Das ermöglicht eine flache Ausgestaltung der Multiaperturabbildungsvorrichtung 10 entlang der y-Richtung, die auch als Dickenrichtung verstanden werden kann oder parallel hierzu verlaufen kann. Basierend auf der Strahlumlenkeinrichtung 18 kann auf eine Anordnung eines zweiten Bildsensors und/oder eines zweiten Arrays optischer Kanäle verzichtet werden, um von einander verschiedene Gesichtsfelder (Objektbereiche) zu erfassen. Basierend auf der translatorischen Bewegung der Strahlumlenkeinrichtung kann ein Vorhalten eines Bauraums für die Bewegung der Strahlumlenkeinrichtung entlang der Dickenrichtung teilweise oder vollständig entfallen, so dass ein hohes Maß an Miniaturisierung ermöglicht ist. Eine Anordnung der Bereiche oder Blöcke 36b bzw. 36a zum Umlenken der Strahlengänge 32-1 bis 32-4 kann als erste Position Pos1 bzw. zweiten Position Pos 2 der Strahlumlenkeinrichtung 18 verstanden werden.

Der Aktor 24 kann beispielsweise als pneumatischer Aktor, als hydraulischer Aktor, als piezoelektrischer Aktor, als Gleichstrommotor, als Schrittmotor (Stepper-Motor), als thermisch aktuierter Aktor, als elektrostatischer Aktor, als elektrostriktiver Aktor, magnetostriktiver Aktor oder als Tauchspulenantrieb gebildet sein.

Das einzeilige Array 14 kann beispielsweise einen Träger 38 aufweisen, durch den optischen Kanäle 16a-d hindurchlaufen. Hierfür kann der Träger 38 beispielsweise opak ausgebildet sein und transparente Bereiche für die optischen Kanäle 16a-d aufweisen. Innerhalb der oder benachbart zu den transparenten Bereichen und/oder an Endbereichen hiervon können die Optiken der optischen Kanäle 16a-d angeordnet sein. Alternativ oder zusätzlich kann der Träger 38 transparent gebildet sein, beispielsweise basierend auf einem Polymermaterial und/oder einem Glasmaterial. An einer Oberfläche des Trägers 38 können Optiken (Linsen) der optischen Kanäle 16a-d angeordnet sein, die die Abbildung des jeweiligen Teilgesichtsfeldes des Gesamtgesichtsfeldes auf den jeweiligen Bildsensorbereich 34a-d des Bildsensors 12 ermöglichen. Vorteilhaft daran ist, dass eine Abmessung der optischen Kanäle 16a-d und/oder der Multiaperturabbildungsvorrichtung 10 von einer Abmessung (Durchmesser) der Optiken entlang der Dickenrichtung abhängen kann. Der Träger 38 kann im Wesentlichen eine Abmessung entlang der Dickenrichtung aufweisen, wie die Optiken, so dass ein geringes Maß an zusätzlichem Bauraum oder kein zusätzlicher Bauraum entlang der Dickenrichtung für den Träger 38 des einzeiligen Arrays 14 vorgesehen werden muss.

Die Bildsensorbereiche 34a-d können beispielsweise jeweils aus einem Chip gebildet sein, der ein entsprechendes Pixelarray umfasst, wobei die Bildsensorbereiche auf einem gemeinsamen Substrat bzw. einer gemeinsamen Platine montiert sein können. Alternativ wäre es natürlich auch möglich, dass die Bildsensorbereiche 34a-d jeweils aus einem Teil eines gemeinsamen Pixelarrays, das sich kontinuierlich über die Bildsensorbereiche 34a-d erstreckt, gebildet sind, wobei das gemeinsame Pixelarray beispielsweise auf einem einzelnen Chip gebildet ist. Beispielsweise werden dann lediglich die Pixelwerte des gemeinsamen Pixelarrays in den Bildsensorbereichen 34a-d ausgelesen. Verschiedene Mischungen dieser Alternativen sind natürlich ebenfalls möglich, wie z.B. das Vorhandensein eines Chips für zwei oder mehr Kanäle und eines weiteren Chips für wiederum andere Kanäle oder dergleichen. In dem Fall mehrerer Chips des Bildsensors 12 können diese beispielsweise auf einer oder mehreren Platinen montiert sein, wie z.B. alle gemeinsam oder gruppenweise oder dergleichen.

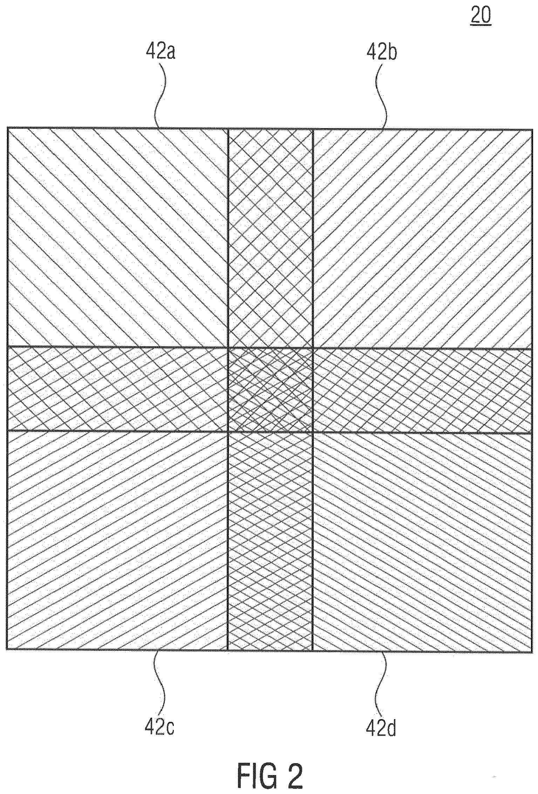

Fig. 2 zeigt eine schematische Ansicht eines Gesamtgesichtsfeldes 20 umfassend vier Teilgesichtsfelder 42a-d. Die Teilgesichtsfelder 42a-d können beispielsweise den optischen Kanälen 16a-d zugeordnet sein. Eine Anzahl von Teilgesichtsfeldern kann höher und/oder niedriger sein und bspw. auf einer Anzahl optischer Kanäle in einer Multiaperturabbildungsvorrichtung basieren. Bezug nehmend auf Fig. 1 kann beispielsweise der Strahlengang 32-1 hin zu dem Teilgesichtsfeld 42a, der Strahlengang 32-2 hin zu dem Teilgesichtsfeld 42b, der Strahlengang 32-3 hin zu dem Teilgesichtsfeld 42c und/oder der Strahlengang 32-4 hin zu dem Teilgesichtsfeld 42d gelenkt werden. Obwohl eine Zuordnung zwischen Strahlengängen 32-1 bis 32-4 zu den Teilgesichtsfeldern 42a-d beliebig ist, wird deutlich, dass ausgehend von der Strahlumlenkeinrichtung 18 die Strahlengänge 42-1 bis 42-4 in voneinander verschiedene Richtungen gelenkt werden.

Das bedeutet, die optischen Kanäle können ausgebildet sein, um einander überlappende Teilgesichtsfelder des Gesamtgesichtsfeldes 20 zu erfassen. Die Strahlengänge 32-1 bis 32-4 können an einer dem Bildsensor 12 abgewandten Seite der Strahlumlenkeinrichtung 18 eine gleiche Blickrichtung und innerhalb der gleichen Blickrichtung unterschiedliche Neigungen oder Winkel aufweisen. Die unterschiedlichen Neigungen ermöglichen eine Erfassung von unterschiedlichen Teilgesichtsfeldern des Gesamtgesichtsfeldes. Die unterschiedlichen Neigungen können durch die Strahlumlenkeinrichtung 18 und/oder durch die Optiken der optischen Kanäle 16a-d erhalten werden.

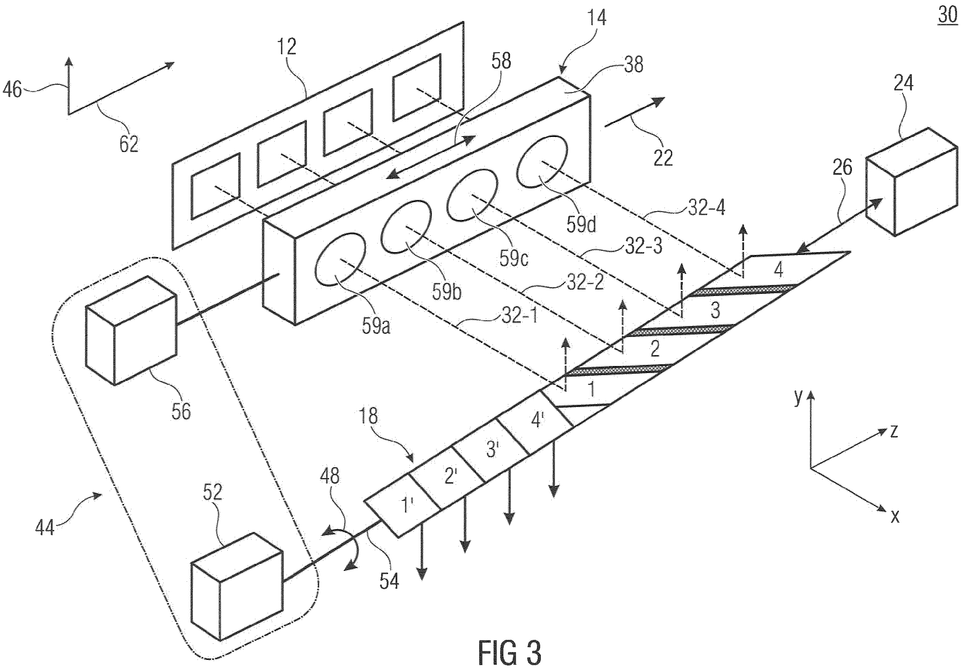

Fig. 3 zeigt eine schematische Ansicht einer erfindungsgemäßen Multiaperturabbildungsvorrichtung 30, die gegenüber der Multiaperturabbildungsvorrichtung 10 dahin gehend modifiziert ist, dass die Multiaperturabbildungsvorrichtung 30 einen optischen Bildstabilisator zur Bildstabilisierung einer Bildachse 46 durch Erzeugen einer Rotationsbewegung 48 der Strahlumlenkeinrichtung 18 umfasst. Der Bildstabilisator 44 kann einen Aktor 52 umfassen, der ausgebildet ist, um die Rotationsbewegung 48 zu erzeugen. Hierfür kann der Aktor 52 mechanisch mit der Strahlumlenkeinrichtung 18 verbunden sein. Der Aktor 52 kann ausgebildet sein, um die Rotationsbewegung 48 analog zu erzeugen. Dies kann so verstanden werden, dass beispielsweise zwischen der ersten Stellung, der zweiten Stellung und/oder weiteren Stellungen der Strahlumlenkeinrichtung 18 entlang der translatorischen Bewegung 26 im Wesentlichen positionsdiskret umgeschaltet werden kann, und die Positionen der Strahlumlenkeinrichtung einfach stabil, bistabil oder mehrfach stabil ausgeführt sein können. Dies kann beispielsweise als positionsdiskrete Stellungen verstanden werden, zwischen denen die Strahlumlenkeinrichtung 18 bewegt wird. Die translatorische Bewegung 26 kann durch die analoge rotatorische Bewegung 48 überlagert werden, wobei die analoge Bewegung als positionskontinuierlich oder zumindest als eine wesentlich kleinere Schrittweite als die translatorische Bewegung 26 aufweisend verstanden werden kann. Die Rotationsbewegung 48 kann beispielsweise um eine Rotationsachse 54 der Strahlumlenkeinrichtung 18 erzeugbar sein. Die Rotationsachse 54 kann parallel zu der Zeilenerstreckungsrichtung 22 des einzeiligen Arrays angeordnet sein. Die Rotationsbewegung 48 der Strahlumlenkeinrichtung 18 kann bspw. in einem Winkelbereich von ±15°, ±10° oder ±1° um eine Standardposition ausführbar sein. Basierend auf der Rotation oder Verkippung der Strahlumlenkeinrichtung 18 kann die optische Bildstabilisierung entlang der Bildachse 46, die beispielsweise senkrecht zu der Zeilenerstreckungsrichtung 22 im Raum angeordnet ist, erhalten werden. Die Rotationsbewegung 48 kann einen gleichen oder vergleichbaren Effekt hervorrufen, der erhalten werden würde, wenn das einzeilige Array 14 gegenüber dem Bildsensor 12 entlang einer Richtung senkrecht zu der Zeilenerstreckungsrichtung 22 und parallel zu dem Bildsensor 12 bewegt werden würde. Basierend auf der Rotationsbewegung 48 kann jedoch eine derartige translatorische Bewegung vermieden werden, so dass ein Vorhalten eines Bauraums entlang der Richtung senkrecht zu der Zeilenerstreckungsrichtung 22 und parallel zu dem Bildsensor 12 für eine Bewegung des Bildsensors 12 oder des einzeiligen Arrays 14 vermieden werden kann. Vereinfacht ausgedrückt kann die optische Bildstabilisierung entlang der Bildachse 46 ohne zusätzlichen Bauraum entlang einer Höhenrichtung oder Dickenrichtung, beispielsweise der y-Richtung, realisiert werden, was vorteilhaft ist.

Erfindungsgemäß umfasst der optische Bildstabilisator 44 einen weiteren Aktor 56, der ausgebildet ist, um das einzeilige Array 14 entlang der Zeilenerstreckungsrichtung 22 basierend auf einer translatorischen Bewegung 58 translatorisch zu bewegen. Die translatorische Bewegung 58 ermöglicht eine Bildstabilisierung entlang einer zweiten Bildachse 62. Die Bildachsen 48 und 62 können senkrecht zueinander angeordnet sein und beispielsweise Erstreckungsrichtungen eines zu erfassenden Bildes beschreiben. Die Aktoren 52 und/oder 56 können als beispielsweise als pneumatischer Aktor, als hydraulischer Aktor, als piezoelektrischer Aktor, als Gleichstrommotor, als Schrittmotor (Stepper-Motor), als thermisch aktuierter Aktor, als elektrostatischer Aktor, als elektrostriktiver Aktor, magnetostriktiver Aktor oder als Tauchspulenantrieb gebildet sein.

Gemäß weiteren Ausführungsbeispielen kann der Aktor 56 und/oder andere Aktoren ausgebildet sein, um einen Abstand zwischen dem Bildsensor 12 und dem einzeiligen Array 14 bzw. zwischen dem Bildsensor 12 und Optiken 59a-d der optischen Kanäle zu verändern. Hierfür kann bspw. der Aktor 56 ausgebildet sein, um das einzeilige Array 14 entlang eines Strahlengangs der Strahlengänge 32-1 bis 32-4 bzw. senkrecht zur Zeilenerstreckungsrichtung 22 zu bewegen, um einen Fokus der Abbildung des Gesichtsfeldes zu verändern und/oder um eine Autofokusfunktion zu erhalten. Zusätzlich kann der Aktor 56 oder ein weiterer Aktor ausgebildet sein, um einen Abstand zwischen dem einzeiligen Array 14 und der Strahlumlenkeinrichtung 18 zumindest im Wesentlichen konstant oder auch bei Nutzung keines zusätzlichen Aktors zumindest im Wesentlichen, ggf. exakt konstant zu halten, d.h., die Strahlumlenkeinrichtung 18 in einem Umfang zu bewegen, wie das einzeilige Array 14. Bei Kameras, die keine Strahlumlenkeinrichtung aufweisen, kann eine Implementierung einer Fokusfunktion zu einer erhöhten Abmessung (Dicke) der Vorrichtung führen. Basierend auf der Strahlumlenkeinrichtung kann dies ohne eine zusätzliche Abmessung entlang einer Abmessung parallel zu einer Hauptseite des Bildsensors 12 und senkrecht zu der Zeilenerstreckungsrichtung 22 (bspw. eine Dicke entlang der y-Richtung) der Multiaperturabbildungsvorrichtung erfolgen, da ein die Bewegung ermöglichender Bauraum senkrecht hierzu angeordnet werden kann. Basierend auf einem konstanten Abstand zwischen einzeiligem Array 14 und der Strahlumlenkeinrichtung 18 kann eine Strahlumlenkung in einem eingestellten (ggf. optimalen) Zustand beibehalten werden. Vereinfacht ausgedrückt, kann die Abbildungsvorrichtung 30 eine Fokuseinrichtung zum Verändern eines Fokus aufweisen. Die Fokuseinrichtung kann ausgebildet sein, um eine Relativbewegung (Fokussierungsbewegung) zwischen zumindest einer Optik 59a-d der optischen Kanäle der Multiaperturabbildungsvorrichtung 30 und dem Bildsensor 12 bereitzustellen. Die Fokuseinrichtung kann einen Aktor zum Bereitstellen der Relativbewegung aufweisen, etwa den Aktor 56 und/oder 52 und/oder weitere Aktoren. Die Strahlumlenkeinrichtung 18 kann dabei durch entsprechende konstruktive Auslegung oder Nutzung eines weiteren Aktors simultan zur Fokussierungsbewegung mitbewegt werden. Das bedeutet, dass ein Abstand zwischen dem einzeiligen Array 14 und der Strahlumlenkeinrichtung unverändert bleibt und/oder dass die Strahlumlenkeinrichtung 18 gleichzeitig oder zeitversetzt in einem gleichen oder vergleichbaren Umfang wie die Fokussierungsbewegung bewegt wird, so dass zumindest zu einem Zeitpunkt einer Aufnahme des Gesichtsfeldes durch die Multiaperturabbildungsvorrichtung unverändert verglichen mit einem Abstand vor einer Veränderung des Fokus ist.

Die Optiken 59a-d können an einer Hauptseite des Trägers 38 angeordnet sein. Der Träger 38 kann eine Relativposition zwischen den Optiken 59a-d stabil halten. Der Träger 38 kann transparent gebildet sein und bspw. ein Glasmaterial und/oder ein Polymermaterial umfassen. Die Optiken 59a-d können an zumindest einer Oberfläche des Trägers 38 angeordnet sein. Der Träger 38 kann von den für die Abbildung in den einzelnen optischen Kanälen genutzten optischen Strahlengängen 32-1 bis 32-4 passiert werden. Die optischen Kanäle der Multiaperturabbildungsvorrichtung können den Träger 38 zwischen der Strahlumlenkeinrichtung 18 und einem Bildsensor 12 durchqueren. Dies ermöglicht eine geringe Abmessung des Trägers 38 und mithin des einzeiligen Arrays 14 entlang einer Richtung parallel zu dem Bildsensor 12 und senkrecht zu der Zeilenerstreckungsrichtung 22 bzw. entlang der y-Richtung, da auf eine Einfassung der Optiken 59a-d in einem Umfangsbereich derselben verzichtet werden kann. Gemäß Ausführungsbeispielen ist der Träger 38 entlang der Richtung parallel zu einer Hauptseite des Bildsensors 12 und senkrecht zu der Zeilenstreckungsrichtung 22 nicht oder lediglich unwesentlich, d. h., höchstens 20 %, höchstens 10 % oder höchstens 5 % , größer ausgebildet, als eine entsprechende Abmessung der Optik 59a-d.

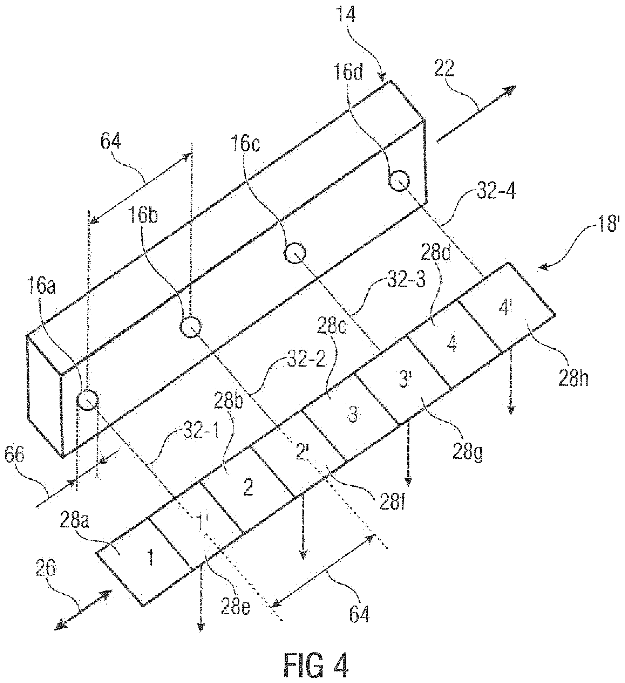

Fig. 4 zeigt eine schematische Ansicht des einzeiligen Arrays 14 und der Strahlumlenkeinrichtung 18'. Das einzeilige Array 14 kann so gebildet sein, dass die optischen Kanäle 16a-d und/oder durch sie hindurchlaufende Strahlengänge 32-1 bis 32-4 in einem Bereich der Strahlumlenkeinrichtung 18 entlang der Zeilenerstreckungsrichtung 22 einen Abstand 64 zueinander aufweisen. Der Abstand 64 kann zumindest eine Abmessung 66 eines optischen Kanals 16a, 16b, 16c oder 16d eines optischen Kanals entlang der Zeilenerstreckungsrichtung 22 betragen. Die Strahlumlenkeinrichtung 18' kann so gebildet sein, dass einem optischen Kanal 16a-d zugeordnete Strahlumlenkelemente 28a und 28e, 28b und 28f, 28c und 28g bzw. 28d und 28h benachbart zueinander angeordnet sind. Dies kann so verstanden werden, dass erste Strahlumlenkelemente 28a-d, die den optischen Kanälen 16a-d zugeordnet sein können und eine Erfassung eines ersten Gesamtgesichtsfeldes ermöglichen, und zweite Strahlumlenkelemente 28e-h, die den optischen Kanälen 16a-d zugeordnet sein können und eine Erfassung eines zweiten, von dem ersten verschiedenen Gesamtgesichtsfeldes ermöglichen, einander abwechselnd entlang der Zeilenerstreckungsrichtung 22 in oder an der Strahlumlenkeinrichtung 18' angeordnet sind. Basierend auf einer Position des jeweiligen Gesichtsfeldes kann die Umlenkung der Strahlengänge 32-1 bis 32-4 als von einander verschiedene Blickrichtung der Multiaperturabbildungsvorrichtung hin zu dem jeweiligen Gesichtsfeld verstanden werden. Vereinfacht ausgedrückt kann sich jeweils ein in dem aktuellen Betriebszustand oder einer aktuellen Stellung ungenutztes Strahlumlenkelement zwischen zwei optischen Kanälen 16a und 16b, 16b und 16c bzw. 16c und 16d befinden. Eine derartige Anordnung ermöglicht, dass die translatorische Bewegung 26 zum Umschalten zwischen der ersten Stellung und der zweiten Stellung basierend auf einer geringeren Wegstrecke ausgeführt wird, etwa verglichen mit einer Wegstrecke der translatorischen Bewegung 26, wie sie in Fig. 1 dargestellt ist, und wo die Wegstrecke beispielsweise einer Länge eines Blocks 36a oder 36b entlang der Zeilenerstreckungsrichtung 22 entsprechen kann, kann die translatorische Bewegung geringer sein und bspw. eine Hälfte oder ein Viertel hiervon betragen. Basierend auf der abwechselnden Anordnung kann somit eine Verkleinerung des Bauraums einer Multiaperturabbildungsvorrichtung entlang der Zeilenerstreckungsrichtung erhalten werden. Die Strahlumlenkeinrichtung 18' kann beispielsweise in der Multiaperturabbildungsvorrichtung 10 oder 30 alternativ oder zusätzlich zu der Strahlumlenkeinrichtung 18 angeordnet sein.

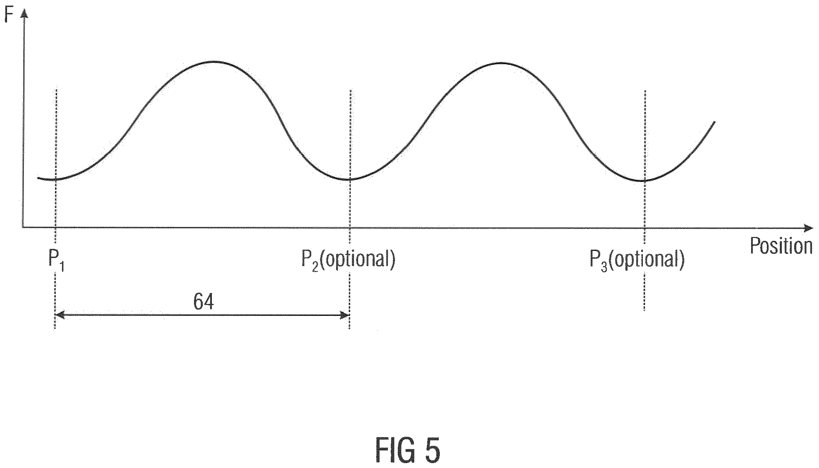

Fig. 5 zeigt ein schematisches Diagramm eines Kräfteverlaufs über eine Bewegung der Strahlumlenkeinrichtung 18 oder 18' über die translatorische Bewegung 26 hinweg. An der Abszisse ist die Position eines festen Punktes der Strahlumlenkeinrichtung entlang der Zeilenerstreckungsrichtung 22 angetragen. Die Ordinate des Graphen zeigt eine erforderliche Kraft eines Aktors zum Bewegen der Strahlumlenkeinrichtung in eine positive bzw. negative Zeilenerstreckungsrichtung. Die Bewegung der Strahlumlenkeinrichtung kann einfach stabil, bistabil oder mehrfach stabil erfolgen. Beispielsweise können stabile Positionen P₁, P₂ und/oder P₃ so verstanden werden, dass das Kräftediagramm ein lokales Minimum an der jeweiligen Position aufweist. Ein Abstand zwischen zwei stabilen Positionen, etwa zwischen der Position P₁ und der Position P₂ kann beispielsweise dem Abstand 64 entsprechen, wie es im Zusammenhang mit der Fig. 4 beschrieben ist. Das bedeutet, dass ein Abstand zwischen zwei stabilen Positionen P₁ und P₂ einem Abstand zweier optischer Kanäle entlang der Zeilenerstreckungsrichtung entsprechen kann.

Einfach stabile, bistabile oder mehrfach stabile Positionen können beispielsweise erhalten werden, indem der Aktor 24 als Schrittmotor ausgebildet ist. Ist die Strahlumlenkeinrichtung beispielsweise ausgebildet, um zwischen zwei Positionen hin und her bewegt zu werden, kann eine der Positionen P₁ oder P₂ beispielsweise eine Ruheposition des Aktors sein oder hierauf basieren. Der Aktor kann beispielsweise ausgebildet sein, um die translatorische Bewegung 26 gegenüber einer Federkraft auszuführen, die bei Erreichen der jeweils anderen Position eine Gegenkraft ausübt, die bei einer Wegnahme der Kraft des Aktors die Strahlumlenkeinrichtung wieder zurück in ihre Ausgangsposition bewegt. Das bedeutet, dass eine stabile Position auch in Bereichen des Kräftediagramms erhalten werden kann, die kein lokales Kräfteminimum aufweisen. Beispielsweise kann es sich um ein Kräftemaximum handeln. Alternativ oder zusätzlich kann eine stabile Position basierend auf magnetischen oder mechanischen Kräften zwischen der Strahlumlenkeinrichtung 18 und einem benachbarten Gehäuse oder Substrat erhalten werden. Das bedeutet, der Aktor 24 zum translatorischen Bewegen der Strahlumlenkeinrichtung kann ausgebildet sein, um die Strahlumlenkeinrichtung in eine bistabile oder mehrfach stabile Position zu bewegen. Alternativ können für bistabile Anordnungen der Positionen einfache mechanische Anschläge vorgesehen sein, die zwei Endpositionen definieren, zwischen denen eine Positionsschaltung in den definierten Endlagen erfolgt.

Weist die Strahlumlenkeinrichtung eine dritte Stellung auf, beispielsweise die Position P₂ oder eine hiervon verschiedene stabile oder instabile Position, und ist die Strahlumlenkeinrichtung zwischen der ersten, zweiten und dritten Stellung P₁, P₂ und P₃ entlang der Zeilenerstreckungsrichtung des einzeiligen Arrays translatorisch bewegbar angeordnet, so kann die Strahlumlenkeinrichtung so ausgebildet sein, dass sie in der ersten Stellung, in der zweiten Stellung und in der dritten Stellung den Strahlengang jeden optischen Kanals in eine voneinander verschiedene Richtung umlenkt. Die Position der Strahlumlenkeinrichtung kann eine Blickrichtung der Multiaperturabbildungsvorrichtung hin zu von einander verschiedenen Gesamtgesichtsfeldern zumindest teilweise bestimmen. Optiken der optischen Kanäle oder Neigungen der Strahlumlenkeinrichtung können die optischen Kanäle innerhalb der Blickrichtung in unterschiedliche Teilgesichtsfelder des jeweiligen Gesamtgesichtsfeldes lenken. Unter Bezugnahme auf Fig. 1 kann die Strahlumlenkeinrichtung 18 beispielsweise weitere Strahlumlenkelemente umfassen, die eine von den Strahlumlenkelementen 28a-d und 28e-h jeweils verschiedene Orientierung aufweisen.

Gemäß weiteren Ausführungsbeispielen kann die Strahlumlenkeinrichtung zwischen mehr als drei Stellungen translatorisch bewegt werden.

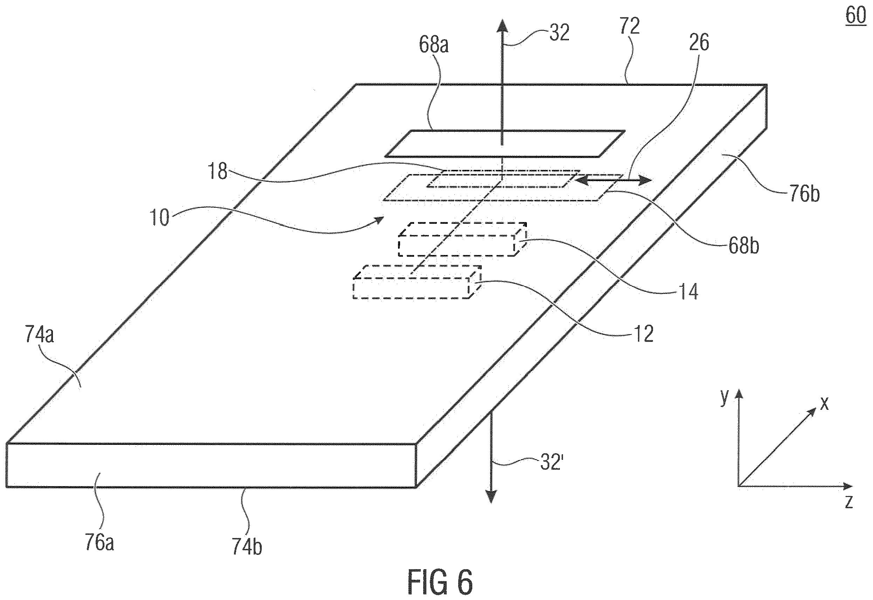

Fig. 6 zeigt eine schematische perspektivische Ansicht einer tragbaren Vorrichtung 60, die die Multiaperturabbildungsvorrichtung 10 umfasst. Alternativ oder zusätzlich kann die tragbare Vorrichtung 60 auch andere Multiaperturabbildungsvorrichtungen, wie etwa die Multiaperturabbildungsvorrichtung 30 umfassen. Die tragbare Vorrichtung 60 kann beispielsweise als Kommunikationsvorrichtung ausgebildet sein, wie etwa ein Mobiltelephon (Smartphone), ein Tablet-Computer oder ein mobiles Musikabspielgerät.

Basierend auf der Multiaperturabbildungsvorrichtung 10 kann mittels einer Multiaperturabbildungsvorrichtung eine Erfassung von Gesichtsfeldern entlang verschiedener Richtungen der tragbaren Vorrichtung ermöglicht werden. Beispielsweise kann basierend auf der ersten Stellung der Strahlumlenkeinrichtung 18 ein Strahlengang 32 der optischen Kanäle der Multiaperturabbildungsvorrichtung entlang einer ersten Blickrichtung umgelenkt werden. Hierbei kann es sich beispielsweise um eine positive y-Richtung handeln. Basierend auf der zweiten Stellung der Strahlumlenkeinrichtung 18 kann der Strahlengang entlang einer anderen Blickrichtung umgelenkt werden, wie es durch den Strahlengang 32' angedeutet ist. Hierbei kann es sich beispielsweise um eine negative y-Richtung handeln. Beispielsweise können die Strahlengänge 32 und/oder 32' durch transparente Bereiche 68a bzw. 68b aus einem Gehäuse der tragbaren Vorrichtung 60 austreten. Vorteilhaft daran ist, dass eine Anordnung der Komponenten Bildsensor, einzeiliges Array von optischen Kanälen und Strahlumlenkeinrichtung in einer Ebene erfolgen kann, die orthogonal zu einer eigentlichen Erfassungsrichtung (beispielsweise positive oder negative y-Richtung) angeordnet ist. Alternativ oder zusätzlich ist auch eine schräge oder verkippte Anordnung der Ebene möglich, etwa wenn zumindest eine Blickrichtung einen Winkel von ungleich 90° bzw. ungleich 180° zu einer anderen Blickrichtung aufweist.

Basierend auf der Strahlumlenkeinrichtung 18 und der beschriebenen Anordnung der Komponenten Array 14 und Bildsensor 12 hierzu kann das Gehäuse 72 flach ausgeführt sein. Das bedeutet, dass eine Ausdehnung entlang einer Dickenrichtung oder ein Abstand zwischen zwei Hauptseiten 74a und 74b des Gehäuses 72 gering verglichen mit der Ausdehnung des Gehäuses entlang anderer Raumrichtungen sein kann. Die Hauptseiten 74a und 74b können beispielsweise diejenigen Seiten oder Flächen des Gehäuses 72 sein, die eine große oder größte Fläche aufweisen. Beispielsweise, jedoch ohne einschränkende Wirkung, kann es sich hierbei um eine Vorderseite und eine Rückseite handeln. Seiten- oder Nebenflächen 76a und 76b können die Hauptseiten 74a und 74b miteinander verbinden, wobei eine Erstreckung der Nebenseiten 76a und 76b von einer Hauptseite 74a oder 74b hin zu der andere Hauptseite 74b bzw. 74a beispielsweise als Dicke des Gehäuses 72 oder der tragbaren Vorrichtung verstanden werden kann. Die y-Richtung kann beispielsweise als Dickenrichtung verstanden werden. Eine Ausdehnung des Gehäuses 72 entlang anderer Richtungen, beispielsweise der x-Richtung und/oder der z-Richtung kann zumindest ein Dreifaches, zumindest ein Fünffaches oder zumindest ein Siebenfaches der Ausdehnung entlang der Dickenrichtung betragen.

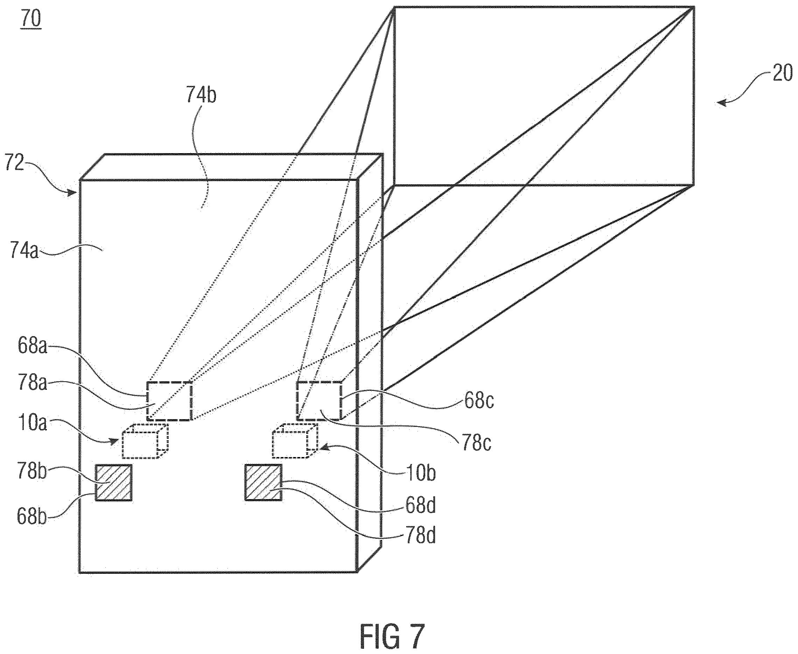

Fig. 7 zeigt eine schematische perspektivische Ansicht einer tragbaren Vorrichtung 70, die einer erste Multiaperturabbildungsvorrichtung 10a und eine zweite Multiaperturabbildungsvorrichtung 10b umfasst, und ausgebildet ist um das Gesamtgesichtsfeld 20 stereoskopisch mit den Multiaperturabbildungsvorrichtungen zu erfassen. Das Gesamtgesichtsfeld 20 ist bspw. an einer der Hauptseite 74a abgewandten Hauptseite 74b angeordnet. Beispielsweise können die Multiaperturabbildungsvorrichtungen 10a und 10b das Gesamtgesichtsfeld 20 durch transparente Bereiche 68a bzw. 68c erfassen, wobei in der Hauptseite 74b angeordnete Blenden 78a und 78c zumindest teilweise transparent sind. In der Hauptseite 74a angeordnete Blenden 78b und 78d können transparenten Bereiche 68b bzw. 68d zumindest teilweise optisch verschließen, so dass ein Umfang von Falschlicht aus einer der Hauptseite 74a zugewandten Seite, das die Aufnahmen der Multiaperturabbildungsvorrichtungen 10a und/oder 10b verfälschen kann, zumindest reduziert ist. Obwohl die Multiaperturabbildungsvorrichtungen 10a und 10b räumlich von einander beabstandet angeordnet dargestellt sind, können die Multiaperturabbildungsvorrichtungen 10a und 10b auch räumlich benachbart oder kombiniert angeordnet sein. Bspw. können die einzeiligen Arrays der Abbildungsvorrichtungen 10a und 10b nebeneinander oder parallel zu einander angeordnet sein. Die einzeiligen Arrays können Zeilen zueinander bilden, wobei jede Multiaperturabbildungsvorrichtung 10a und 10b ein einzeiliges Array aufweist. Die Abbildungsvorrichtungen 10a und 10b können eine gemeinsame Strahlumlenkeinrichtung, und/oder einen gemeinsamen Träger 38 und/oder einen gemeinsamen Bildsensor 12 aufweisen. Alternativ oder zusätzlich zu der Multiaperturabbildungsvorrichtung 10a und/oder 10b kann die Multiaperturabbildungsvorrichtung 30 angeordnet sein.

Die transparenten Bereiche 68a-d können zusätzlich mit einer schaltbaren Blende 78a-d ausgestattet sein, die den optischen Aufbau für den Fall der Nicht-Benutzung abdeckt. Die Blende 78a-d kann ein mechanisch bewegtes Teil umfassen. Die Bewegung des mechanisch bewegten Teils kann unter Nutzung eines Aktors erfolgen, wie es beispielsweise für die Aktoren 24, 52 und 56 beschrieben ist. Die Blende 78a-d kann alternativ oder zusätzlich elektrisch steuerbar sein und eine elektrochrome Schicht oder eine elektrochrome Schichtfolge umfassen, d. h., als elektrochrome Blende gebildet sein.

Prinzipiell können beliebig viele Teilmodule umfassend Bildsensor(en), Abbildungsoptik(en) und Spiegel-Array(s) angeordnet werden. Teilmodule können auch als ein System aufgebaut sein. Die Teilmodule oder Systeme können in einem Gehäuse, wie einem Smartphone verbaut sein. Die Systeme können in einer oder mehreren Zeilen und/oder Reihen und an einer beliebigen Stelle angeordnet sein. Beispielsweise können zwei Abbildungsvorrichtungen 10 in dem Gehäuse 72 angeordnet sein, um eine stereoskopische Erfassung eines Gesichtsfeldes zu ermöglichen.

Gemäß weiteren Ausführungsbeispielen umfasst die Vorrichtung 70 weitere Multiaperturabbildungsvorrichtungen 10 und/oder 30, so dass das Gesamtgesichtsfeld 20 mit mehr als zwei Multiaperturabbildungsvorrichtungen abtastbar ist. Dies ermöglicht eine Anzahl von sich teilweise überlappenden Kanälen, die infolge ihrer kanalweise angepassten Blickrichtungen das Gesamtfeld aufnehmen. Für eine stereoskopische oder eine höhere Ordnung aufweisende Erfassung des Gesamtgesichtsfeldes kann mindestens eine weitere Anordnung von Kanälen gemäß hierin beschriebenen Ausführungsbeispiele und/oder der beschriebenen Anordnung von Kanälen angeordnet sein, die als genau eine Zeile oder als separate Module ausgeprägt sein können. Das bedeutet, dass das einzeilige Array einen ersten Abschnitt und einen zweiten Abschnitt aufweisen kann, wobei die Abschnitte einer ersten bzw. von der ersten verschiedenen zweiten Multiaperturabbildungsvorrichtung zugeordnet werden können. Die optischen Kanäle der weiteren Zeile können ebenfalls jeweils überlappende Teilbereiche aufnehmen und zusammen das Gesamtgesichtsfeld abdecken. Dies ermöglicht den Erhalt eines Stereo-, Trio-, Quattro-, usw. Aufbaus von Arraykameras, die aus Kanälen bestehen, die teilweise überlappen und innerhalb ihrer Teilgruppierung das Gesamtgesichtsfeld abdecken.

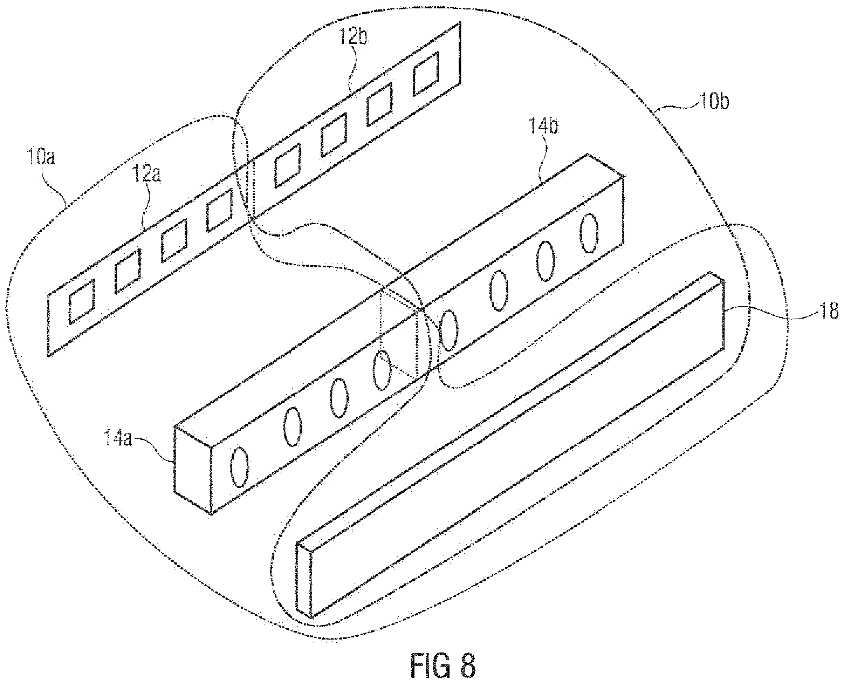

Fig. 8 zeigt einen schematischen Aufbau umfassend eine erste Multiaperturabbildungsvorrichtung 10a und eine zweite Multiaperturabbildungsvorrichtung 10b, wie er bspw. in dem Abbildungssystem 70 angeordnet sein kann. Die Arrays 14a und 14b sind einzeilig gebildet und bilden eine gemeinsame Zeile. Die Bildsensoren 12a und 12b können auf einem gemeinsamen Substrat bzw. auf einem gemeinsamen Schaltungsträger wie einer gemeinsamen Platine oder einem gemeinsamen Flexboard montiert sein. Alternativ können die Bildsensoren 12a und 12b auch von einander verschiedene Substrate umfassen. Verschiedene Mischungen dieser Alternativen sind natürlich ebenfalls möglich, wie etwa Multiaperturabbildungsvorrichtungen umfassend einen gemeinsamen Bildsensor, ein gemeinsames Array und/oder eine gemeinsame Strahlumlenkeinrichtung 18 sowie weitere Multiaperturabbildungsvorrichtungen, die separate Komponenten aufweisen. Vorteilhaft an einem gemeinsamen Bildsensor, einem gemeinsamen Array und/oder einer gemeinsamen Strahlumlenkeinrichtung ist, dass eine Bewegung einer jeweiligen Komponente mit einer großen Präzision durch ansteuern einer geringen Menge von Aktoren erhalten werden kann und eine Synchronisierung zwischen Aktoren reduziert oder vermieden werden kann. Ferner kann eine hohe thermische Stabilität erhalten werden. Alternativ oder zusätzlich können auch andere und/oder von einander verschiedene Multiaperturabbildungsvorrichtungen 10 und/oder 30 ein gemeinsames Array, einen gemeinsamen Bildsensor und/oder eine gemeinsame Strahlumlenkeinrichtung aufweisen.

Ein Verfahren zum Herstellen einer Multiaperturabbildungsvorrichtung umfasst ein Bereitstellen eines einzeiligen Arrays von nebeneinander angeordneten optischen Kanälen und ein Anordnen einer Strahlumlenkeinrichtung zum Umlenken eines Strahlengangs der optischen Kanäle. Die Strahlumlenkeinrichtung wird so angeordnet, dass die Strahlumlenkeinrichtung eine erste Stellung und eine zweite Stellung aufweist, zwischen denen die Strahlumlenkeinrichtung entlang einer Zeilenerstreckungsrichtung des einzeiligen Arrays translatorisch bewegbar ist und so dass die Strahlumlenkeinrichtung in der ersten Stellung und in der zweiten Stellung den Strahlengang jedes optischen Kanals in eine voneinander verschiedene Richtung umlenkt.

In anderen Worten können Multiaperturkameras mit linearer Kanalanordnung mehrere optische Kanäle umfassen, die nebeneinander angeordnet sind und jeweils Teile des Gesamtgesichtsfeldes übertragen oder erfassen. Gemäß Ausführungsbeispielen kann vorteilhafterweise ein Spiegel (Strahlumlenkeinrichtung) vor die Abbildungslinsen (Optiken der optischen Kanäle) angeordnet werden, der zur Strahlumlenkung nutzbar ist und zur Reduzierung der Bauhöhe beitragen kann.

Das bedeutet, dass Aktoren so angeordnet sein können, dass sie zumindest teilweise zwischen zwei Ebenen angeordnet ist, die durch Seiten eines Quaders aufgespannt werden. Die Seiten des Quaders können parallel zueinander sowie parallel zu der Zeilenerstreckungsrichtung des Arrays und eines Teils des Strahlengangs der optischen Kanäle zwischen dem Bildsensor und der Strahlumlenkeinrichtung parallel ausgerichtet sein. Das Volumen des Quaders ist minimal und umfasst dennoch den Bildsensor, das Array und die Strahlumlenkeinrichtung sowie deren betriebsbedingte Bewegungen.

Eine Dickenrichtung der Multiaperturabbildungsvorrichtung kann normal zu den Ebenen und/oder parallel zu der y-Richtung angeordnet sein. Die Aktoren können eine Abmessung oder Ausdehnung parallel zu der Dickenrichtung aufweisen. Ein Anteil von höchstens 50 %, höchstens 30 % oder höchstens 10 % der Abmessung kann ausgehend von einem Bereich zwischen den Ebenen über die Ebene hinausragen oder aus dem Bereich herausragen Die Aktoren ragen somit bspw. höchstens unwesentlich über die Ebene hinaus. Gemäß Ausführungsbeispielen ragen die Aktoren nicht über die Ebenen hinaus. Vorteilhaft daran ist, dass eine Ausdehnung der Multiaperturabbildungsvorrichtung entlang der Dickenrichtung durch die Aktoren nicht vergrößert wird.

Ein Volumen der Multiaperturabbildungsvorrichtung kann einen geringen oder minimalen Bauraum zwischen den aufgespannten Ebenen und aufweisen. Entlang der lateralen Seiten oder Erstreckungsrichtungen der Ebenen und/oder kann ein Bauraum der Multiaperturabbildungsvorrichtung groß oder beliebig groß sein. Das Volumen des virtuellen Quaders ist bspw. von einer Anordnung des Bildsensors, des einzeiligen Arrays und der Strahlumlenkeinrichtung beeinflusst, wobei die Anordnung dieser Komponenten gemäß der hierin beschriebenen Ausführungsbeispiele so erfolgen kann, dass der Bauraum dieser Komponenten entlang der Richtung senkrecht zu den Ebenen und mithin der Abstand der Ebenen und zueinander gering oder minimal wird. Gegenüber anderen Anordnungen der Komponenten kann das Volumen und/oder der Abstand anderer Seiten des virtuellen Quaders vergrößert sein.

In Kombination mit einer kanalweise angepassten Strahlumlenkeinrichtung (Facettenspiegel), wobei die Facetten plan oder beliebig gekrümmt oder mit einer Freiformfläche versehen sein können, kann es vorteilhafterweise möglich sein, dass die Abbildungsoptiken der Kanäle im Wesentlichen identisch aufgebaut sind, wohingegen die Blickrichtung der Kanäle durch die einzelnen Facetten des Spiegelarrays vorgegeben oder beeinflusst sind. Der Ablenkspiegel kann dabei translativ bewegt werden, wobei die Bewegungsrichtung senkrecht zu den optischen Achsen der Kanäle, d.h. entlang der Zeilenerstreckungsrichtung, verläuft. Der Ablenkspiegel kann beispielsweise einseitig reflektiv sein, wobei metallische oder dielektrische Schichtfolgen angeordnet sein können. Der Ablenkspiegel weist beispielsweise eine höhere Anzahl von Facetten auf als optische Kanäle im Abbildungsmodul (Träger) ausgeprägt sind. Gemäß einem Ausführungsbeispiel kann die Anzahl von Facetten einem Vielfachen der Anzahl von optischen Kanälen entsprechen. Das Vielfache kann mit der Anzahl von Stellungen der Strahlumlenkeinrichtung entlang der translatorischen Bewegung oder mit einer Anzahl von Blickrichtungen der Multiaperturabbildungsvorrichtung übereinstimmen. Gemäß einem weiteren Ausführungsbeispiel kann die Anzahl von Strahlumlenkelementen einem Vielfachen der optischen Kanäle verschieden sein. Zumindest ein Strahlumlenkelement kann in einer Stellung der Strahlumlenkeinrichtung ausgebildet oder angeordnet sein, um Strahlengänge von zumindest zwei optischen Kanälen umzulenken. Die translative Bewegung des Spiegels kann vorzugsweise bistabil oder mehrfach stabil, d.h., positionsdiskrekt erfolgen, wobei eine kleinste Schrittweite gemäß Ausführungsbeispielen einem Abstand zweier Abbildungskanäle entsprechen kann.

Alternativ kann die translative Bewegung des Spiegels auch analog, d.h., positionskontinuierlich oder eine geringere Schrittweite als ein Abstand zwischen zwei Positionen erfolgen. Die translative Bewegung des Spiegels kann für das Umschalten der Blickrichtung der Kamera (Abbildungsvorrichtung) genutzt werden. So kann beispielsweise zwischen den Blickrichtungen vorne, links, rechts, oben, unten und/oder hinten bezogen auf das Display umgeschaltet werden, wobei die Richtungsbegriffe beliebig austauschbar oder anpassbar sind und keine einschränkende Wirkung entfalten sollen.

Der Ablenkspiegel (Strahlumlenkeinrichtung) kann dabei zusätzlich drehbar gelagert sein, wobei die Drehachse senkrecht zu den optischen Achsen, ggf. parallel zu der Zeilenerstreckungsrichtung der optischen Kanäle verlaufen kann. Die Drehung des Spiegels kann analog erfolgen. Die analoge Drehung des Spiegels kann für eine eindimensionale Anpassung der Bildlage nutzbar sein, um eine optische Bildstabilisierung zu ermöglichen. Hierbei kann eine Bewegung um wenige Grad ausreichend sein, bspw. höchstens ±15°, höchstens ±10° oder höchstens ±1°. Die bistabile/mehrfach stabile oder analoge translative Bewegung kann dabei mit der rotativen Bewegung der Bildstabilisierung kombiniert werden. Insbesondere können bisherige Lösungen in mobilen Vorrichtungen, wie etwa Smartphones, die zwei Kameras mit Blickrichtung vorne und Blickrichtung hinten nutzen, durch einen Aufbau ersetzt werden, der eine umschaltbare Blickrichtung aufweist. Dieser Aufbau zeichnet sich in Abgrenzung zu bisherigen Lösungen zusätzlich dadurch aus, dass das Sichtfenster (transparenter Bereich) im Gehäuse für die Kameras mit Blickrichtung nach vorne und nach hinten an derselben Position, jedoch in oberer und unterer Gehäuseabdeckung, d.h. gegenüberliegend, angeordnet sein können. Alternativ oder zusätzlich können weitere Multiaperturabbildungsvorrichtungen angeordnet sein, beispielsweise um eine stereoskopische Aufnahme eines Gesamtgesichtsfeldes zu ermöglichen. Bereiche der Gehäuseabdeckungen, durch die der Strahlengang hindurchführt, beispielsweise 68a und 68b, können transparent sein und können für den Fall der Nutzung sichtbaren Lichts beispielsweise Glasmaterialien und/oder Polymermaterialien aufweisen.

Es können beliebig viele Teilmodule, d.h. Multiaperturabbildungsvorrichtungen, bestehend aus zumindest einem Bildsensor, Abbildungsoptiken und Spiegel-Arrays, nutzbar sein. Die Teilmodule können beispielsweise als ein System aufgebaut sein. Die Teilmodule können in einem Gehäuse, wie etwa einem Smartphone verbaut sein. Die Teilmodule können in einer oder mehreren Zeilen und/oder Reihen oder an einer beliebigen Stelle angeordnet sein. Benachbart zu den transparenten Bereichen 68a und/oder 68b oder in einem Bereich vor und/oder hinter den transparenten Bereiche 68a und/oder 68b entlang einer Strahlrichtung der optischen Kanäle, können zusätzlich schaltbare Blenden angeordnet sein, die den transparenten Bereich im Falle einer Nicht-Benutzung oder im Falle einer Benutzung eines anderen transparenten Bereichs abdecken, d.h. optisch zumindest teilweise verschließen. Die Blende kann ein mechanisch bewegtes Teil sein oder umfassen. Die Bewegung kann unter Nutzung hierin beschriebener Aktorprinzipien ermöglicht werden. Die Blende kann alternativ oder zusätzlich eine elektrochrome Blende sein, elektrisch steuerbar sein und/oder eine oder mehrere elektrochrome Schicht(en) bzw. Schichtfolge(n) umfassen.

Hierin beschriebene Ausführungsbeispiele ermöglichen eine Verringerung der Bauhöhe von Multiaperturabbildungsvorrichtungen durch Nutzung eines Multiaperturansatzes mit linearer Kanalanordnung. Dies ermöglicht eine Einsparung einer zweiten bzw. weiteren Kamera zur Erfassung eines weiteren Gesamtgesichtsfeldes basierend auf einer Strahlumlenkung mit einem Spiegel (Strahlumlenkeinrichtung). Basierend auf einer analogen Spiegelverkippung für eine eindimensionale optische Bildstabilisierung kann eine Bildqualität erhöht werden. Dies ermöglicht einen vereinfachten Gesamtaufbau verbunden mit geringeren Herstellungskosten und einer verringerten Baugröße des Gesamtsystems.

Hierin beschriebene Ausführungsbeispiele können für Multiaperturabbildungssysteme mit linearer Kanalanordnung und kleinster Baugröße eingesetzt werden.

Es wurde bereits weiter oben darauf hingewiesen, dass die Strahlengänge bzw. optischen Achsen ausgehend von der Strahlumlenkeinrichtung in voneinander verschiedene Richtungen gelenkt werden können. Dies kann erhalten werden, indem die Strahlengänge während einer Umlenkung an der Strahlumlenkeinrichtung und/oder durch die Optiken abweichend von einer Parallelität zueinander gelenkt werden. Die Strahlengänge bzw. optischen Achsen können von einer Parallelität vor bzw. ohne Strahlumlenkung abweichend sein. Dieser Umstand wird im Folgenden damit umschrieben, dass die Kanäle mit einer Art Vorab-Divergenz versehen sein können. Mit dieser Vorab-Divergenz der optischen Achsen wäre es möglich, dass sich beispielsweise nicht alle Facettenneigungen von Facetten der Strahlumlenkeinrichtung untereinander unterscheiden, sondern dass manche Gruppen von Kanälen beispielsweise die Facetten mit gleicher Neigung besitzen oder auf diese gelenkt werden. Letztere können dann einstückig bzw. kontinuierlich ineinander übergehend gebildet werden, quasi als eine Facette, die dieser Gruppe von in Zeilenerstreckungsrichtung benachbarten Kanälen zugeordnet ist. Die Divergenz der optischen Achsen dieser Kanäle könnte dann von der Divergenz dieser optischen Achsen stammen, wie sie durch einen lateralen Versatz zwischen optischen Zentren der Optiken der optischen Kanäle und Bildsensorbereichen der Kanäle erzielt wird. Die Vorab-Divergenz könnte sich beispielsweise auf eine Ebene beschränken. Die optischen Achsen könnten beispielsweise vor bzw. ohne Strahlumlenkung in einer gemeinsamen Ebene verlaufen, aber in dieser divergent, und die Facetten bewirken lediglich nur noch eine zusätzliche Divergenz in der anderen Transversalebene, d.h. es sind alle parallel zur Zeilenerstreckungsrichtung und gegeneinander nur noch unterschiedlich zur vorerwähnten gemeinsamen Ebene der optischen Achsen geneigt, wobei hier wiederum mehrere Facetten gleichen Neigung besitzen können bzw. einer Gruppe von Kanälen gemeinsam zugeordnet sein könnten, deren optischen Achsen sich beispielsweise bereits in der vorerwähnten gemeinsamen Ebene der optischen Achsen paarweise vor bzw. ohne Strahlumlenkung unterscheiden. Vereinfachend können die Optiken eine (Vorab-)Divergenz der Strahlengänge entlang einer ersten (Bild-)Richtung und die Strahlumlenkeinrichtung eine Divergenz der Strahlengänge entlang einer zweiten (Bild-)Richtung ermöglichen.

Die erwähnte möglicherweise vorliegende Vorab-Divergenz kann beispielsweise erzielt werden, indem die optischen Zentren der Optiken auf einer Geraden entlang der Zeilenerstreckungsrichtung liegen, während die Zentren der Bildsensorbereiche von der Projektion der optischen Zentren entlang der Normalen der Ebene der Bildsensorbereiche auf Punkte auf einer Geraden in der Bildsensorebene abweichend angerordnet sind, wie z.B. an Punkten, die von den Punkten auf vorerwähnter Gerade in der Bildsensorebene kanalindividuell entlang der Zeilenerstreckungsrichtung und/oder entlang der Richtung senkrecht zur sowohl der Zeilenerstreckungsrichtung als auch der Bildsensornormalen abweichen. Alternativ kann Vorab-Divergenz erzielt werden, indem die Zentren der Bildsensoren auf einer Geraden entlang der Zeilenerstreckungsrichtung liegen, während die Zentren der Optiken von der Projektion der optischen Zentren der Bildsensoren entlang der Normalen der Ebene der optischen Zentren der Optiken auf Punkte auf einer Geraden in der Optikzentrenebene abweichend angerordnet sind, wie z.B. an Punkten, die von den Punkten auf vorerwähnter Gerade in der Optikzentrenebene kanalindividuell entlang der Zeilenerstreckungsrichtung und/oder entlang der Richtung senkrecht zur sowohl der Zeilenerstreckungsrichtung als auch der Normalen der Optikzentrenebene abweichen. Es wird bevorzugt, wenn vorerwähnte kanalindividuelle Abweichung von der jeweiligen Projektion lediglich in Zeilenerstreckungsrichtung verläuft, also die optischen Achsen sich lediglich in einer gemeinsamen Ebene befinden mit einer Vorabdivergenz verwehen werden. Sowohl optische Zentren als auch Bildsensorbereichszentren liegen dann jeweils auf einer Geraden parallel zur Zeilenerstreckungsrichtung, aber mit unterschiedlichen Zwischenabständen. Ein lateraler Versatz zwischen Linsen und Bildsensoren in senkrechter lateraler Richtung zur Zeilenerstreckungsrichtung führte demgegenüber zu einer Vergrößerung der Bauhöhe. Ein reiner In-Ebene-Versatz in Zeilenerstreckungsrichtung ändert die Bauhöhe nicht, aber es resultieren ggf. weniger Facetten und/oder die Facetten weisen nur eine Kippung in einer Winkelorientierung auf, was den Aufbau vereinfacht. So können bspw. jeweils benachbarte optische Kanäle in der gemeinsamen Ebene verlaufende, jeweils gegeneinander schielende, also mit einer Vorab-Divergenz versehene, optische Achsen aufweisen. Eine Facette kann bezüglich einer Gruppe von optischen Kanälen angeordnet, lediglich in einer Richtung geneigt und parallel zur Zeilenerstreckungsrichtung sein.

Ferner könnte es vorgesehen sein, dass manche optische Kanäle dem gleichen Teilgesichtsfeld zugeordnet sind, wie z.B. zum Zwecke der Superresolution bzw. zur Erhöhung der Auflösung, mit welcher das entsprechende Teilgesichtsfeld durch diese Kanäle abgetastet wird. Die optischen Kanäle innerhalb einer solchen Gruppe verliefen dann beispielsweise vor Strahlumlenkung parallel und würden durch eine Facette auf ein Teilgesichtsfeld umgelenkt werden. Vorteilhafterweise lägen Pixelbilder des Bildsensors eines Kanals einer Gruppe in Zwischenpositionen zwischen Bildern der Pixel des Bildsensors eines anderen Kanals dieser Gruppe.

Denkbar wäre beispielsweise auch ohne Superresolutionszwecke, sondern lediglich zu Stereoskopiezwecken eine Ausführung, bei denen eine Gruppe von unmittelbar benachbarten Kanälen in Zeilenerstreckungsrichtung mit ihren Teilgesichtsfeldern das Gesamtgesichtsfeld vollständig abdecken, und dass eine weitere Gruppe einander unmittelbar benachbarter Kanäle das Gesamtgesichtsfeld ihrerseits vollständig abdecken.

Obige Ausführungsbeispiele lassen sich also in Form einer Multiaperturabbildungsvorrichtung und/oder eines eine derartige Multiaperturabbildungsvorrichtung umfassenden Systems implementieren, und zwar mit einzeiliger Kanalanordnung, wobei jeder Kanal ein Teilgesichtsfeld eines Gesamtgesichtsfeld überträgt und sich die Teilgesichtsfelder teilweise überlappen. Ein Aufbau mit mehreren solcher Multiaperturabbildungsvorrichtungen für Stereo- Trio-, Quattro usw. Aufbauten für die 3D-Bildaufnahme ist möglich. Die Mehrzahl von Modulen kann dabei als eine zusammenhängende Zeile ausgeführt sein. Die zusammenhängende Zeile könnte identische Aktoren und ein gemeinsames Strahlumlenkelement nutzen. Ein oder mehrere eventuell im Strahlengang vorhandene verstärkende Substrate können sich über die gesamte Zeile, die einen Stereo-, Trio, Quattro-Aufbau bilden kann, erstrecken. Es können Verfahren der Superresolution genutzt werden, wobei mehrere Kanäle dieselben Teilbildbereiche abbilden. Die optischen Achsen können auch bereits ohne Strahlumlenkvorrichtung divergent verlaufen, so dass weniger Facetten auf der Strahlumlenkeinheit benötigt werden. Die Facetten besitzen dann vorteilhafter Weise nur eine Winkelkomponente. Der Bildsensor kann einteilig sein, nur eine zusammenhängende Pixelmatrix oder mehrere unterbrochene aufweisen. Der Bildsensor kann aus vielen Teilsensoren zusammengesetzt sein, die z.B. auf einer Leiterplatte nebeneinander angeordnet sind. Ein Autofokusantrieb kann so ausgeführt sein, dass das Strahlumlenkelement synchron mit den Optiken bewegt wird, oder ruhend ist.

Obwohl hierin beschriebene Ausführungsbeispiele eine Anordnung von vier optischen Kanälen zur Erfassung von vier Teilgesichtsfeldern eines Gesamtgesichtsfeldes beschreiben, kann eine hiervon verschiedene Anzahl von optischen Kanälen zur Erfassung einer gleichen oder davon verschiedenen Anzahl von Teilgesichtsfeldern angeordnet sein. Gemäß Ausführungsbeispielen weist eine Multiaperturabbildungsvorrichtung zumindest zwei, zumindest drei, zumindest vier oder zumindest zehn oder mehr optische Kanäle auf, um zumindest zwei, zumindest drei, zumindest vier oder zumindest zehn bzw. mehr Teilgesichtsfelder des Gesamtgesichtsfeldes zu erfassen, wobei ein Teilgesichtsfeld durch zumindest einen optischen Kanal erfassbar ist.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Multiaperturabbildungsvorrichtung (10; 30) mit:
einem einzeiligen Array (14) von nebeneinander angeordneten optischen Kanälen (16a-d) von denen jeder eine Optik (59a-d) umfasst;
einer Strahlumlenkeinrichtung (18) zum Umlenken eines Strahlengangs (32-1 - 32-4) der optischen Kanäle (16a-d); **gekennzeichnet durch**:
einen optischen Bildstabilisator (44) ausgebildet zur Bildstabilisierung entlang einer ersten Bildachse (46) durch Erzeugen einer Rotationsbewegung (48) der Strahlumlenkeinrichtung (18), und weiterhin ausgebildet, um das einzeilige Array (14) entlang einer Zeilenerstreckungsrichtung (22) basierend auf einer translatorischen Bewegung (58) translatorisch für eine Bildstabilisierung entlang einer zweiten Bildachse (62) zu bewegen; und
wobei die Strahlumlenkeinrichtung (18) eine erste Stellung (Pos1) und eine zweite Stellung (Pos2) aufweist, zwischen denen die Strahlumlenkeinrichtung (18) entlang einer Zeilenerstreckungsrichtung (22) des einzeiligen Arrays (14) translatorisch bewegbar ist, wobei die Strahlumlenkeinrichtung (18) so ausgebildet ist, dass sie in der ersten Stellung (Pos1) den Strahlengang (32-1 - 32-4) jedes optischen Kanals mit einem ersten Abschnitt (36a) in eine erste Richtung und in der zweiten Stellung (Pos2) den Strahlengang (32-1 - 32-4) jedes optischen Kanals (16a-d) mit einem zweiten Abschnitt (36b) in eine hiervon verschiedene zweite Richtung umlenkt.

2. Multiaperturabbildungsvorrichtung gemäß Anspruch 1, wobei der optische Bildstabilisator (44) ausgebildet ist, um die Rotationsbewegung (48) durch eine analoge Bewegung zu erzeugen.

3. Multiaperturabbildungsvorrichtung gemäß Anspruch 1 oder 2, wobei die Rotationsbewegung (48) einer translatorischen Bewegung (26) zum Umschalten zwischen der ersten Stellung (Pos1) und der zweiten Stellung (Pos2) überlagerbar ist.

4. Multiaperturabbildungsvorrichtung gemäß einem der vorangehenden Ansprüche, wobei die optischen Kanäle (16a-d) in einem Bereich der Strahlumlenkeinrichtung (18) entlang der Zeilenerstreckungsrichtung (22) einen Abstand (64) zueinander aufweisen, der zumindest eine Abmessung (66) eines optischen Kanals (16a-d) beträgt, wobei die Strahlumlenkeinrichtung (18) eine Mehrzahl von ersten Strahlumlenkelementen (28a-d) zum Erhalten einer ersten Blickrichtung der Multiaperturabbildungsvorrichtung und eine Mehrzahl von zweiten Strahlumlenkelementen (28e-h) zum Erhalten einer zweiten Blickrichtung der Multiaperturabbildungsvorrichtung aufweist, die entlang der Zeilenerstreckungsrichtung (22) einander abwechselnd angeordnet sind.

5. Multiaperturabbildungsvorrichtung gemäß einem der vorangehenden Ansprüche, wobei eine translatorische Bewegung (26) der Strahlumlenkeinrichtung (18) bistabil oder mehrfachstabil erfolgt, wobei ein Abstand zwischen zwei stabilen Positionen einem Abstand (64) zweier optischer Kanäle entlang der Zeilenerstreckungsrichtung (22) entspricht.

6. Multiaperturabbildungsvorrichtung gemäß einem der vorangehenden Ansprüche, die einen Aktor (24) zum translatorischen Bewegen der Strahlumlenkeinrichtung (18) aufweist, wobei der Aktor ausgebildet ist, um die Strahlumlenkeinrichtung (18) in eine bistabile oder mehrfachstabile Position (Pos1, Pos2, Pos3) zu bewegen.

7. Multiaperturabbildungsvorrichtung gemäß einem der vorangehenden Ansprüche, wobei die Strahlumlenkeinrichtung (18) zumindest eine dritte Stellung (Pos3) aufweist und zwischen der ersten (Pos1), zweiten (Pos2) und dritten Stellung (Pos3) entlang der Zeilenerstreckungsrichtung (22) des einzeiligen Arrays (14) translatorisch bewegbar ist, wobei die Strahlumlenkeinrichtung (18) so ausgebildet ist, dass sie in der ersten Stellung (Pos1), in der zweiten Stellung (Pos2) und in der zumindest dritten Stellung (Pos3) den Strahlengang (32-1 - 32-4) jedes optischen Kanals (16a-d) in eine voneinander verschiedene Richtung umlenkt.

8. Multiaperturabbildungsvorrichtung gemäß einem der vorangehenden Ansprüche, die eine Fokuseinrichtung zum Verändern eines Fokus aufweisen, wobei die Fokuseinrichtung einen Aktor (56, 52) zum Bereitstellen einer Relativbewegung zwischen einer Optik (59a-d) eines der optischen Kanäle (16a-d) und einem Bildsensor (12) der Multiaperturabbildungsvorrichtung, umfasst.

9. Multiaperturabbildungsvorrichtung gemäß Anspruch 8, wobei die Fokuseinrichtung ausgebildet ist, um die Relativbewegung zwischen der Optik (59a-d) eines der optischen Kanäle (16a-d) und dem Bildsensor (12) unter Ausführung einer zu der Relativbewegung simultanen Bewegung der Strahlumlenkeinrichtung (18) auszuführen.

10. Multiaperturabbildungsvorrichtung gemäß einem der vorangehenden Ansprüche, wobei die optischen Kanäle (16a-d) ausgebildet sind, um einander überlappende Teilgesichtsfelder (42a-d) eines Gesamtgesichtsfeldes (20) zu erfassen.

11. Multiaperturabbildungsvorrichtung gemäß einem der vorangehenden Ansprüche, wobei die Strahlumlenkeinrichtung (18) als Array von Facetten, die entlang der Zeilenerstreckungsrichtung (22) angeordnet sind, gebildet ist.

12. Multiaperturabbildungsvorrichtung gemäß einem der vorangehenden Ansprüche, die ferner einen Bildsensor (12) zum Aufnehmen einer Abbildung der optischen Kanäle (16a-d) aufweist.

13. Vorrichtung (60) mit einer Multiaperturabbildungsvorrichtung (10; 30) gemäß einem der vorangehenden Ansprüche.

14. Vorrichtung gemäß Anspruch 13, die zumindest eine weitere Multiaperturabbildungsvorrichtung (10; 30) aufweist, wobei die Vorrichtung ausgebildet ist, um ein Gesamtgesichtsfeld zumindest stereoskopisch zu erfassen.

15. Verfahren zum Herstellen einer Multiaperturabbildungsvorrichtung mit folgenden Schritten:
Bereitstellen eines einzeiligen Arrays von nebeneinander angeordneten optischen Kanälen von denen jeder eine Optik (59a-d) umfasst; und
Anordnen einer Strahlumlenkeinrichtung zum Umlenken eines Strahlengangs der optischen Kanäle; **gekennzeichnet durch**:
Anordnen eines optischen Bildstabilisators (44) zur Bildstabilisierung entlang einer ersten Bildachse (46) durch Erzeugen einer Rotationsbewegung (48) der Strahlumlenkeinrichtung (18) und Anordnen des optischen Bildstabilisators (44), um das einzeilige Array (14) entlang einer Zeilenerstreckungsrichtung (22) basierend auf einer translatorischen Bewegung (58) translatorisch für eine Bildstabilisierung entlang einer zweiten Bildachse (62) zu bewegen;
so dass die Strahlumlenkeinrichtung eine erste Stellung und eine zweite Stellung aufweist, zwischen denen die Strahlumlenkeinrichtung entlang einer Zeilenerstreckungsrichtung des einzeiligen Arrays translatorisch bewegbar ist, und so dass die Strahlumlenkeinrichtung in der ersten Stellung den Strahlengang (32-1 - 32-4) jedes optischen Kanals mit einem ersten Abschnitt (36a) in eine erste Richtung und in der zweiten Stellung (Pos2) den Strahlengang (32-1 - 32-4) jedes optischen Kanals (16a-d) mit einem zweiten Abschnitt (36b) in eine hiervon verschiedene zweite Richtung umlenkt.

## Claims

1. A multi-aperture imaging device (10; 30) comprising:
a one-line array (14) of adjacently arranged optical channels (16a-d) each including optics (59a-d);
beam-deflecting means (18) for deflecting an optical path (32-1 - 32-4) of the optical channels (16a-d); **characterized by**:
an optical image stabilizer (44) configured for image stabilization along a first image axis (46) by producing a rotational movement (48) of the beam-deflecting means (18), and further configured for translationally moving the one-line array (14) along a line extension direction (22) based on a translational movement (58) for image stabilization along a second image axis (62); and
wherein the beam-deflecting means (18) comprises a first position (Pos1) and a second position (Pos2) between which the beam-deflecting means (18) is translationally moveable along a line extension direction (22) of the one-line array (14), the beam-deflecting means (18) being configured such that, when located in the first position (Pos1), it deflects the optical path (32-1 - 32-4) of each optical channel with a first portion (36a) into a first direction and, when located in the second position (Pos2), it deflects the optical path (32-1 - 32-4) of each optical channel (16a-d) with a second portion (36b) into a second direction different therefrom.

2. The multi-aperture imaging device as claimed in claim 1, wherein the optical image stabilizer (44) is configured to generate the rotational movement (48) by means of an analogous movement.

3. The multi-aperture imaging device as claimed in claim 1 or 2, wherein the rotational movement (48) may be superimposed on a translational movement (26) for switching between the first position (Pos1) and the second position (Pos2).

4. The multi-aperture imaging device as claimed in any of the previous claims, wherein the optical channels (16a-d) comprise, in an area of the beam-deflecting means (18) along the line extension direction (22), a mutual distance (64) which amounts to at least a dimension (66) of an optical channel (16a-d), the beam-deflecting means (18) comprising a plurality of first beam-deflecting elements (28a-d) for obtaining a first viewing direction of the multi-aperture imaging device and a plurality of second beam-deflecting elements (28e-h) for obtaining a second viewing direction of the multi-aperture imaging device, which are alternately arranged along the line extension direction (22).

5. The multi-aperture imaging device as claimed in any of the previous claims, wherein a translational movement (26) of the beam-deflecting means (18) is performed in a manner that is stable along two or several directions, a distance between two stable positions corresponding to a distance (64) of two optical channels along the line extension direction (22).

6. The multi-aperture imaging device as claimed in any of the previous claims, comprising a actuator (24) for translationally moving the beam-deflecting means (18), the actuator (24) being configured to move the beam-deflecting means (18) into a position that is stable along two or several directions (Pos1, Pos2, Pos3).

7. The multi-aperture imaging device as claimed in any of the previous claims, wherein the beam-deflecting means (18) comprises at least a third position (Pos3) and is translationally moveable between the first (Pos1), the second (Pos2) and the third positions (Pos3) along the line extension direction (22) of the one-line array (14), the beam-deflecting means (18) being configured such that it deflects the optical path (32-1 - 32-4) of each optical channel (16a-d) into mutually different directions depending on whether it is located in the first position (Pos1), in the second position (Pos2) or the in at least third position (Pos3).

8. The multi-aperture imaging device as claimed in any of the previous claims, comprising focusing means for changing a focus, the focusing means including an actuator (56, 52) for providing a relative movement between optics (59a-d) of one of the optical channels (16a-d) and an image sensor (12) of the multi-aperture imaging device.

9. The multi-aperture imaging device as claimed in claim 8, wherein the focusing means is configured to perform the relative movement between the optics (59a-d) of one of the optical channels (16a-d) and the image sensor (12) while performing a movement of the beam-deflecting means (18) that is simultaneous with the relative movement.

10. The multi-aperture imaging device as claimed in any of the previous claims, wherein the optical channels (16a-d) are configured to capture mutually overlapping partial fields of view (42a-d) of a total field of view (20).

11. The multi-aperture imaging device as claimed in any of the previous claims, wherein the beam-deflecting means (18) is formed as an array of facets arranged along the line extension direction (22).

12. The multi-aperture imaging device as claimed in any of the previous claims, further comprising an image sensor (12) for capturing imaging of the optical channels (16a-d).

13. A device (60) comprising a multi-aperture imaging device (10; 30) as claimed in any of the previous claims.

14. The device as claimed in claim 13, comprising at least one further multi-aperture imaging device (10; 30), the device being configured to capture a total field of view in an at least stereoscopic manner.

15. A method of producing a multi-aperture imaging device, comprising:
providing a one-line array of adjacently arranged optical channels each including optics (59a-d); and
arranging beam-deflecting means for deflecting an optical path of the optical channels; **characterized by**:
arranging an optical image stabilizer (44) for image stabilization along a first image axis (46) by producing a rotational movement (48) of the beam-deflecting means (18), and arranging the optical image stabilizer (44) for translationally moving the one-line array (14) along a line extension direction (22) based on a translational movement (58) for image stabilization along a second image axis (62);
such that the beam-deflecting means comprises a first position and a second position between which the beam-deflecting means is translationally moveable along a line extension direction of the one-line array, and such that the beam-deflecting means, when located in the first position, deflects the optical path (32-1 - 32-4) of each optical channel with a first portion (36a) into a first direction and, when located in the second position (Pos2), it deflects the optical path (32-1 - 32-4) of each optical channel (16a-d) with a second portion (36b) into a second direction different therefrom.

## Revendications

1. Dispositif d'imagerie à ouvertures multiples (10 ; 30), avec:
un réseau de rangée unique (14) de canaux optiques disposés juxtaposés (16a à d) présentant, chacun, une optique (59a à d);
un moyen de déviation de faisceau (18) destiné à dévier un trajet de faisceau (32-1 à 32-4) des canaux optiques (16a à d); **caractérisé par**:
un stabilisateur d'image optique (44) conçu pour stabiliser l'image le long d'un premier axe d'image (46) en générant un mouvement de rotation (48) du moyen de déviation de faisceau (18), et conçu par ailleurs pour déplacer en translation le réseau de rangée unique (14) dans une direction d'extension de rangée (22) sur base d'un déplacement en translation (58) pour une stabilisation d'image le long d'un deuxième axe d'image (62); et
dans lequel le moyen de déviation de faisceau (18) présente une première position (Pos1) et une deuxième position (Pos2) entre lesquelles le moyen de déviation de faisceau (18) peut être déplacé en translation dans une direction d'extension de rangée (22) du réseau de rangée unique (14), dans lequel le moyen de déviation de faisceau (18) est conçu de sorte que, dans la première position (Pos1), il dévie le trajet de faisceau (32-1 à 32-4) de chaque canal optique avec un premier segment (36a) dans une première direction et que, dans la deuxième position (Pos2), il dévie le trajet de faisceau (32-1 à 32-4) de chaque canal optique (16a à d) avec un deuxième segment (36b) dans une deuxième direction différente de cette dernière.

2. Dispositif d'imagerie à ouvertures multiples selon la revendication 1, dans lequel le stabilisateur d'image optique (44) est conçu pour générer le mouvement de rotation (48) par un mouvement analogique.

3. Dispositif d'imagerie à ouvertures multiples selon la revendication 1 ou 2, dans lequel le mouvement de rotation (48) peut être superposé à un mouvement de translation (26) pour commuter entre la première position (Pos1) et la deuxième position (Pos2).

4. Dispositif d'imagerie à ouvertures multiples selon l'une des revendications précédentes, dans lequel les canaux optiques (16a à d) dans une zone du moyen de déviation de faisceau (18) dans la direction d'extension de rangée (22) présentent une distance (64) entre eux qui est d'au moins une dimension (66) d'un canal optique (16a à d), dans lequel le moyen de déviation de faisceau (18) présente une pluralité de premiers éléments de déviation de faisceau (28a à d), destinés à obtenir une première direction de vision du dispositif d'imagerie à ouvertures multiples, et une pluralité de deuxièmes éléments de déviation de faisceau (28a à h), destinés à obtenir une deuxième direction de vision du dispositif d'imagerie à ouvertures multiples, qui sont disposés de manière à alterner entre eux dans la direction d'extension de rangée (22).

5. Dispositif d'imagerie à ouvertures multiples selon l'une des revendications précédentes, dans lequel un mouvement de translation (26) du moyen de déviation de faisceau (18) a lieu de manière bistable ou multi-stable, dans lequel une distance entre deux positions stables correspond à une distance (64) entre deux canaux optiques dans la direction d'extension de rangée (22).

6. Dispositif d'imagerie à ouvertures multiples selon l'une des revendications précédentes, qui présente un actionneur (24) destiné à déplacer en translation le moyen de déviation de faisceau (18), dans lequel l'actionneur est conçu pour déplacer le moyen de déviation de faisceau (18) vers une position bistable ou multi-stable (Pos1, Pos2, Pos3).

7. Dispositif d'imagerie à ouvertures multiples selon l'une des revendications précédentes, dans lequel le moyen de déviation de faisceau (18) présente au moins une troisième position (Pos3) et peut être déplacé en translation entre la première (Pos1), la deuxième (Pos2) et la troisième position (Pos3) dans la direction d'extension de rangée (22) du réseau de rangée unique (14), dans lequel le moyen de déviation de faisceau (18) est conçu de sorte que, dans la première position (Pos1), dans la deuxième position (Pos2) et dans l'au moins troisième position (Pos3), il dévie le trajet de faisceau (32-1 à 32-4) de chaque canal optique (16a à d) dans une direction différente l'une de l'autre.

8. Dispositif d'imagerie à ouvertures multiples selon l'une des revendications précédentes, qui comporte un moyen de focalisation destiné à modifier une focalisation, dans lequel le moyen de focalisation comporte un actionneur (56, 52) destiné à fournir un mouvement relatif entre une optique (59a à d) de l'un des canaux optiques (16a à d) et un capteur d'image (12) du dispositif d'imagerie à ouvertures multiples.

9. Dispositif d'imagerie à ouvertures multiples selon la revendication 8, dans lequel le moyen de focalisation est conçu pour effectuer le mouvement relatif entre l'optique (59a à d) de l'un des canaux optiques (16a à d) et le capteur d'image (12) en effectuant un mouvement du moyen de déviation de faisceau (18) de manière simultanée avec le mouvement relatif.

10. Dispositif d'imagerie à ouvertures multiples selon l'une des revendications précédentes, dans lequel les canaux optiques (16a à d) sont conçus pour détecter des champs de vision partiels qui viennent en chevauchement (42a à d) d'un champ de vision global (20).

11. Dispositif d'imagerie à ouvertures multiples selon l'une des revendications précédentes, dans lequel le moyen de déviation de faisceau (18) est formé comme un réseau de facettes qui sont disposées dans la direction d'extension de rangée (22).

12. Dispositif d'imagerie à ouvertures multiples selon l'une des revendications précédentes, qui présente par ailleurs un capteur d'image (12) destiné à capturer une image des canaux optiques (16a à d).

13. Dispositif (60) avec un dispositif d'imagerie à ouvertures multiples (10 ; 30) selon l'une des revendications précédentes.

14. Dispositif selon la revendication 13, qui présente au moins un autre dispositif d'imagerie à ouvertures multiples (10; 30), dans lequel le dispositif est conçu pour détecter un champ de vision global au moins de manière stéréoscopique.

15. Procédé de fabrication d'un dispositif d'imagerie à ouvertures multiples, aux étapes suivantes consistant à:
prévoir un réseau de rangée unique de canaux optiques disposés de manière juxtaposée comportant, chacun, une optique (59a à d); et
disposer un moyen de déviation de faisceau destiné à dévier un trajet de faisceau des canaux optiques; **caractérisé par** le fait de:
disposer un stabilisateur d'image optique (44) destiné à stabiliser l'image le long d'un premier axe d'image (46) en générant un mouvement de rotation (48) du moyen de déviation de faisceau (18) et disposer le stabilisateur d'image optique (44) de manière à déplacer en translation le réseau de rangée unique (14) dans une direction d'extension de rangée (22) sur base d'un mouvement de translation (58) pour une stabilisation d'image le long d'un deuxième axe d'image (62);
de sorte que le moyen de déviation de faisceau présente une première position et une deuxième position entre lesquelles peut être déplacé en translation le moyen de déviation de faisceau dans une direction d'extension de rangée du réseau de rangée unique, et de sorte que le moyen de déviation de faisceau dévie, dans la première position, le trajet du faisceau (32-1 à 32-4) de chaque canal optique avec un premier segment (36a) dans une première direction et, dans la deuxième position (Pos2), le trajet de faisceau (32-1 à 32-4) de chaque canal optique (16a à d) avec un deuxième segment (36b) dans une deuxième direction de déviation différente de cette dernière.
